# EUROPEAN PATENT APPLICATION

(11) **EP 3 800 540 A1**
(43) Date of publication of application: **07.04.2021**
(21) Application number: 20199637.8
(22) Date of filing: 01.10.2020
(51) Int. Cl.: G06F 3/12

(54) **PROGRAM, INFORMATION PROCESSING SYSTEM, INFORMATION PROCESSING METHOD, AND INFORMATION PROCESSING APPARATUS**

(30) Priority: 02.10.2019 JP 2019182071; 11.08.2020 JP 2020135984
(71) Applicant: Ricoh Company, Ltd., Tokyo 143-8555 (JP)
(72) Inventor: HAYASHI, Yasuhiro, Ohta-ku, Tokyo 143-8555 (JP)
(74) Representative: White, Duncan Rohan

(57) **Abstract**

A program causes an information processing apparatus to function as a job list acquisition unit configured to send related job specification information that specifies one or more related jobs to an output system to obtain a list of the related jobs sent from the information processing apparatus to the output system, and a display controller configured to display the list of the related jobs obtained by the job list acquisition unit on a screen.

## Description

### BACKGROUND OF THE INVENTION

### 1. Field of the Invention

An aspect of this disclosure relates to a program, an information processing system, an information processing method, and an information processing apparatus.

### 2. Description of the Related Art

In a known pull print service (location-free printing or secure printing), a print job is sent from an information processing apparatus operated by a user to an output system on a network, and the user downloads the print job from the output system and prints the print job using an output apparatus.

For example, Japanese Laid-Open Patent Publication No. 2017-111799 proposes a technology that enables a user to easily specify a print job registered in an output system. Japanese Laid-Open Patent Publication No. 2017-111799 discloses a system in which when a user inputs a temporary code, which is issued by a server to an information processing apparatus, to an output apparatus, the output apparatus sends the temporary code to the server, receives the print job from the server, and prints the print job.

However, with the related-art technology, it is difficult for the information processing apparatus to display a list of print jobs stored in the output system. For example, with the related-art technology where the information processing apparatus simply holds temporary codes, the user needs to send each temporary code to the output system to confirm a print job, and therefore the workload of the user becomes high.

### SUMMARY OF THE INVENTION

According to an aspect of this disclosure, there is provided a program for causing an information processing apparatus to function as a job list acquisition unit configured to send related job specification information that specifies one or more related jobs to an output system to obtain a list of the related jobs sent from the information processing apparatus to the output system, and a display controller configured to display the list of the related jobs obtained by the job list acquisition unit on a screen.

### BRIEF DESCRIPTION OF THE DRAWINGS

FIG. 1 is a drawing illustrating operations of an information processing system according to a comparative example;
FIG. 2 is a drawing illustrating operations of an information processing system;
FIG. 3 is a drawing illustrating an example of a configuration of an information processing system;
FIG. 4 is a drawing illustrating an example of a hardware configuration of an information processing apparatus;
FIG. 5 is a drawing illustrating an example of a hardware configuration of an output system;
FIG. 6 is a drawing illustrating an example of a hardware configuration of an output apparatus;
FIG. 7 is a block diagram illustrating functional configurations of an information processing apparatus, an output system, and an output apparatus of an information processing system;
FIG. 8 is a sequence chart illustrating an example of a process where an information processing apparatus registers a print job in an output system, sends job identification information to an output apparatus, and the output apparatus executes the print job;
FIG. 9 is a sequence chart illustrating an example of a process where an information processing apparatus registers a print job in an output system, sends information processing apparatus identification information to an output apparatus, and the output apparatus executes the print job;
FIG. 10 is a sequence chart illustrating an example of a process where an information processing apparatus registers a print job in an output system, a user manually inputs job identification information to an output apparatus, and the output apparatus executes the print job;
FIG. 11 is a drawing illustrating transition of screens of an application displayed on a display by an information processing apparatus;
FIG. 12 is a drawing illustrating transition of screens in a case where a user manually inputs job identification information of a print job to an output apparatus;
FIG. 13 is a drawing illustrating an example of transition of screens in a case where an information processing apparatus sends information processing apparatus identification information to an output apparatus via near-field communication;
FIG. 14 is a drawing illustrating an example of a print job list screen displayed in a case where job identification information can be either manually input or transmitted via near-field communication;
FIGs. 15A through 15C are drawings illustrating an example of transition of screens of an output apparatus corresponding to the transition of screens of an information processing apparatus illustrated in FIG. 11;
FIGs. 16A through 16C are drawings illustrating an example of transition of screens of an output apparatus corresponding to the transition of screens of an information processing apparatus illustrated in FIG. 12;
FIGs. 17A through 17C are drawings illustrating an example of transition of screens of an output apparatus corresponding to the transition of screens of an information processing apparatus illustrated in FIG. 14 where both of manual input and transmission via near-field communication are supported;
FIG. 18 is a flowchart illustrating an example of a process where whether job identification information or information processing apparatus identification information is transmitted by an information processing apparatus via near-field communication is determined;
FIG. 19 is a drawing illustrating an example of operations of an information processing system;
FIG. 20 is a drawing illustrating an example of a configuration of an information processing system;
FIG. 21 is a block diagram illustrating functional configurations of an information processing apparatus, an output system, and an output apparatus of an information processing system;
FIG. 22 is a sequence chart illustrating an example of a process where an information processing apparatus registers a print job in an output system, sends user authentication information to an output apparatus, and the output apparatus executes the print job;
FIG. 23 is a sequence chart illustrating an example of a process where an information processing apparatus registers a print job in an output system, sends user authentication information to an output apparatus, and the output apparatus executes the print job;
FIG. 24 is a sequence chart illustrating an example of a process where an information processing apparatus registers a print job in an output system, a user manually inputs job identification information to an output apparatus, and the output apparatus executes the print job;
FIG. 25 is a drawing illustrating examples of screens in a case where an information processing apparatus sends job identification information of each print job or user authentication information to an output apparatus;
FIG. 26 is a drawing illustrating examples of screens in a case where a user manually inputs job identification information of a print job to an output apparatus; and
FIG. 27 is a drawing illustrating examples of screens in a case where information processing apparatus sends user authentication information to an output apparatus.

### DESCRIPTION OF THE EMBODIMENTS

In view of the above-described problems, an aspect of this disclosure provides a program, an information processing system, an information processing method, and an information processing apparatus that make it possible to display a list of print jobs stored in an output system.

Embodiments of the present invention are described below with reference to the accompanying drawings.

### [FIRST EMBODIMENT]

Before describing an information processing system of the present embodiment, an information processing system of a comparative example is described. Note that this comparative example is not a related-art technology.

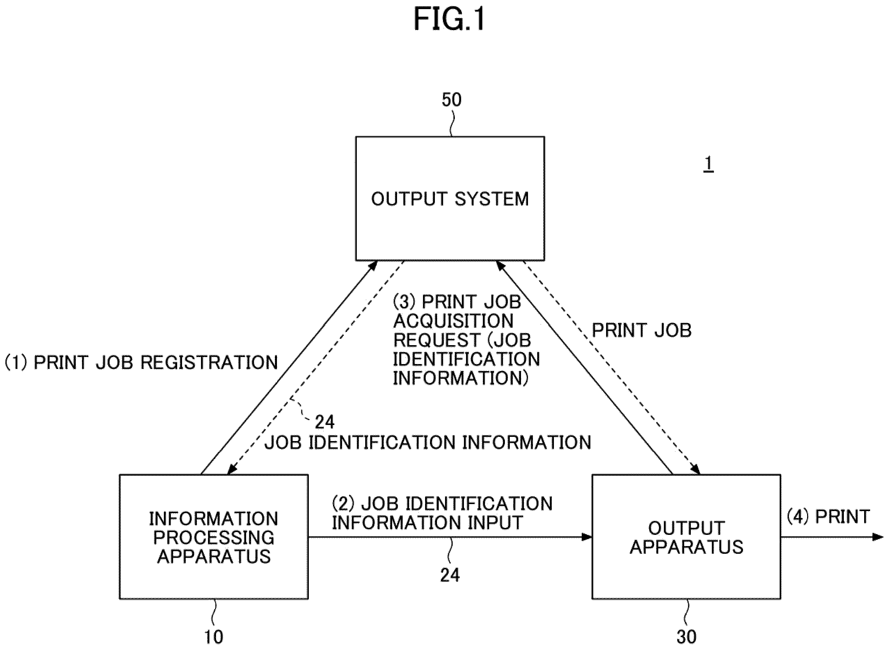

FIG. 1 is a drawing illustrating operations of an information processing system 1 according to a comparative example. A user carries an information processing apparatus 10 and executes a print job on an output apparatus 30 by pull printing using an output system 50.
(1) When the user wants to print a document, the user operates the information processing apparatus 10 to send a print job for printing the document to the output system 50. Application software (which is hereinafter referred to as an "application") or a web browser is running in the information processing apparatus 10, and a uniform resource locator (URL) of the output system 50 is set in the information processing apparatus 10. The information processing apparatus 10 can be connected to a public line (cellular line) such as a mobile phone network and a network such as a LAN.
   When receiving a print job, the output system 50 sends information (which is hereafter referred to as "job identification information") for identifying the print job to the information processing apparatus 10.
(2) When the user moves to the output apparatus 30, the information processing apparatus 10 displays the received job identification information so that the user can manually input job identification information 24 to the output apparatus 30.
(3) The output apparatus 30 can communicate with the output system 50 via a network such as a LAN, and the output apparatus 30 requests the output system 50 to send a print job associated with the job identification information 24. The output system 50 sends the print job associated with the job identification information 24 to the information processing apparatus 10.
(4) The output apparatus 30 prints the print job received from the output system 50.

Thus, in the comparative example, the print job is managed using only the job identification information 24, and therefore it is difficult to display a list of print jobs stored in the output system 50. Also, it is difficult to print multiple print jobs stored in the output system 50 in a batch (or at once).

### <OUTLINE OF INFORMATION PROCESSING SYSTEM>

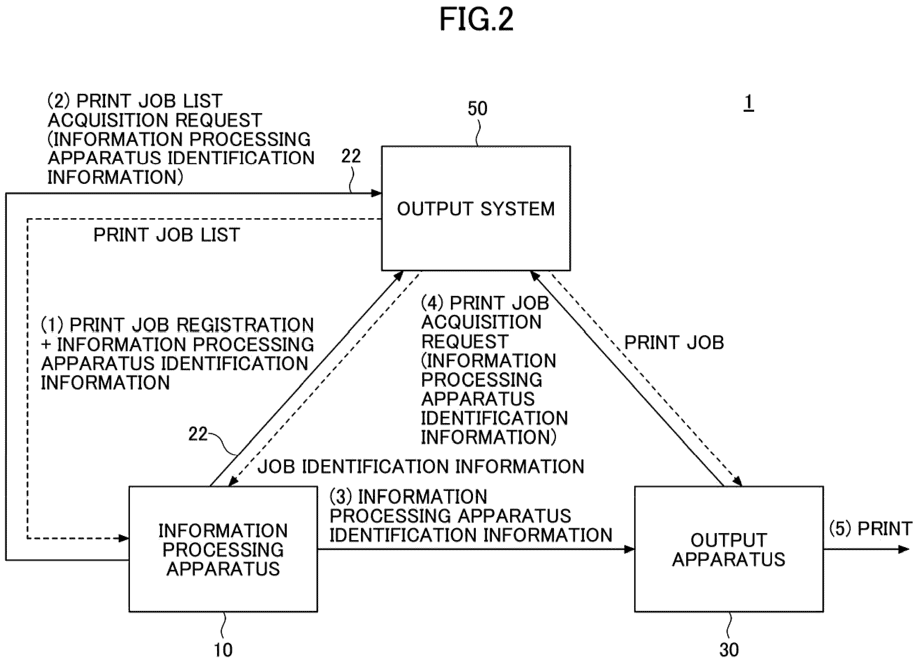

Next, with reference to FIG. 2, operations of an information processing system 1 of the present embodiment are described. FIG. 2 is a drawing illustrating operations of the information processing system 1.
(1) When a user wants to print a document, the user operates the information processing apparatus 10 to send a print job for printing the document to the output system 50. In this case, the information processing apparatus 10 sends the print job and identification information (which is hereafter referred to as information processing apparatus identification information 22) for identifying the information processing apparatus 10 to the output system 50. The information processing apparatus identification information 22 is identification information that uniquely identifies the information processing apparatus 10 and may be, for example, a universally unique identifier (UUID) or a MAC address. In the present embodiment, the information processing apparatus 10 generates the information processing apparatus identification information 22 and sets the information processing apparatus identification information 22 in the information processing apparatus 10. However, the information processing apparatus identification information 22 may be assigned by the output system 50 to the information processing apparatus 10.
   For a received print job, the output system 50 issues job identification information 24 such as a PIN code that can uniquely identify the print job among print jobs stored in the output system 50, and sends the job identification information 24 to the information processing apparatus 10. Also, the output system 50 stores the print job in association with the job identification information 24 and the information processing apparatus identification information 22.
(2) In response to an operation by the user or automatically, the information processing apparatus 10 requests the output system 50 to send a list of print jobs associated with the information processing apparatus identification information 22. The output system 50 sends a list of print jobs associated with the information processing apparatus identification information 22 to the information processing apparatus 10. Thus, in the present embodiment, the information processing apparatus 10 can obtain and display a list of registered print jobs by using the information processing apparatus identification information 22.
(3) When the user moves to the output apparatus 30, the information processing apparatus 10 sends the information processing apparatus identification information 22 to the output apparatus 30 via near-field communication in response to an operation by the user. Although the information processing apparatus identification information 22 may be manually entered, the information processing apparatus identification information 22 is preferably transmitted because of its number of digits. The information processing apparatus 10 can also send the job identification information 24 of a print job selected by the user to the output apparatus 30.
(4) The output apparatus 30 requests the output system 50 to send a list of print jobs associated with the information processing apparatus identification information 22 received from the information processing apparatus 10. The output system 50 sends a list of print jobs associated with the information processing apparatus identification information 22 to the output apparatus 30.
(5) The output apparatus 30 prints print jobs received from the output system 50 in a batch (or at once). Also, the user may select a print job on the operations panel of the output apparatus 30 and print the selected print job.

Thus, the information processing apparatus 10 of the present embodiment can obtain and display a list of print jobs stored in the output system 50 by the user by using the information processing apparatus identification information 22. Also, when the user sends the information processing apparatus identification information 22 to the output apparatus 30, the output apparatus 30 can print all of the print jobs stored in the output system 50 in a batch. Also, the user can print the print jobs separately by sending or inputting the job identification information 24 of each print job to the output apparatus 30.

### <TERMINOLOGY>

A print job is a process that is an execution unit used when the output apparatus 30 prints document data that is requested to print. A print job includes at least document data and may also include print settings. A job in an image forming apparatus is called a print job. However, in other types of apparatuses, jobs with names corresponding to the functions of the apparatuses are executed. Document data may include not only characters but also images and figures, and may include only images.

Related jobs indicate jobs associated with each other by related job specification information.

Related job specification information is, for example, information that associates at least multiple print jobs with each other. In the present embodiment, related job specification information is represented by information processing apparatus identification information or user authentication information. The information processing apparatus identification information may be referred to as application identification information because the information processing apparatus identification information may also identify an application. Also, identification information common to multiple users may be used as related job specification information. For example, jobs registered by the same user, users in the same department, or users in the same team may be referred to as related jobs.

### <EXAMPLE OF SYSTEM CONFIGURATION>

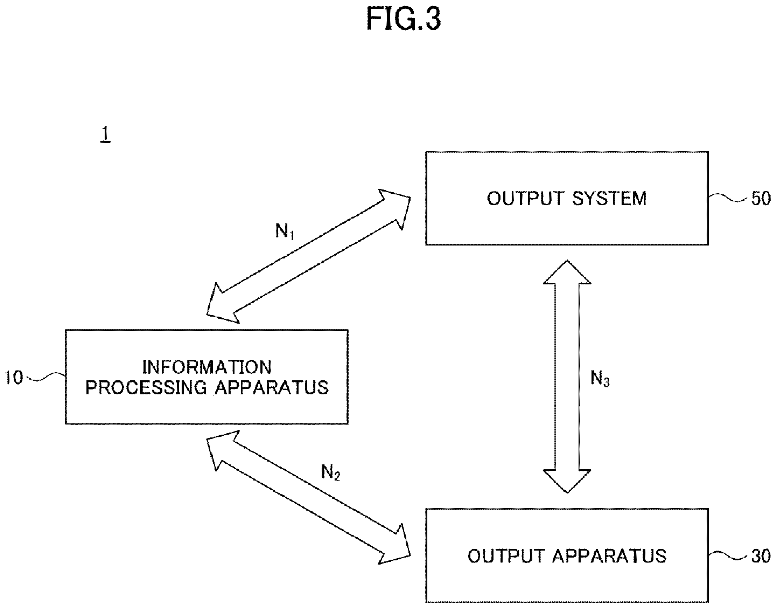

FIG. 3 is a drawing illustrating an example of a configuration of the information processing system 1 of the present embodiment. The information processing system 1 includes the information processing apparatus 10, the output system 50, and the output apparatus 30.

The information processing apparatus 10 and the output system 50 communicate with each other via a network N1. The network N1 of the present embodiment is a network using a public line such as 3G, 4G, 5G, or LTE. A public line is a communication line that connects sites and is physically shared by unspecified users. Examples of public lines include a mobile phone network and a PHS communication network. The information processing apparatus 10 can connect to an access point via a wireless LAN such as Wi-Fi and communicate with the output system 50 via the Internet and can also communicate with the output system 50 via wired communication.

The information processing apparatus 10 and the output apparatus 30 communicate with each other via network N2. The network N2 of the present embodiment is a network that uses a near-field communication technology such as NFC, Bluetooth (registered trademark), or Bluetooth (registered trademark) Low Energy. Also, any network such as infrared communication or visible light communication for communications at a relatively short distance may be used.

The output apparatus 30 and the output system 50 communicate with each other via a network N3. The network N3 of the present embodiment is, for example, a LAN constructed in a facility where the output apparatus 30 and the output system 50 are installed, a WAN including multiple LANs, or the Internet. Any network may be used as long as the output apparatus 30 and the output system 50 can communicate with each other. The network N3 may be a wired network, a wireless network, or a combination of wired and wireless networks. The output apparatus 30 may also connect to a public line to communicate with the output system 50.

The information processing apparatus 10 includes a function as a computer where an application described later is running. The application includes functions to register print jobs in the output system 50, obtain (download) the print jobs, and display a list of the print jobs. The application may also include a function to edit or delete a print job. In addition to this application, the information processing apparatus 10 may also include a general application that assists the user to create document data and obtains document data from the Internet. Also, the application running on the information processing apparatus 10 includes a function to request the output apparatus 30 to print print jobs stored in the output system 50 (or to start communication with the output apparatus 30 and send the print jobs to the output apparatus 30).

Examples of the information processing apparatus 10 include, but are not limited to, a smartphone, a mobile phone, a tablet terminal, a game machine, a personal digital assistant (PDA), a digital camera, a wearable personal computers (PC), a PC, and a game machine.

The output system 50 is, for example, one or more information processing apparatuses on the Internet. An information processing apparatus on a network may be referred to as a server. A server is a computer or software including a function to provide information or a process result in response to a request from a client.

The output system 50 stores print jobs sent from the information processing apparatus 10, and sends the print jobs to the output apparatus 30 in response to a request from the output apparatus 30. The output system 50 includes one or more information processing apparatuses. The output system 50 may be present on the Internet or on-premises. When the output system 50 is present on the Internet, the output system 50 preferably supports cloud computing. "Cloud" is a term used when a specific hardware resource is not intended. The output system may also be referred to as a cloud system or a server system.

The output system 50 also includes a storage for storing print jobs. This storage may be a storage used for a service that provides a disk space on the Internet to the user. The output system 50 may also be referred to as an online storage. The output system 50 may be used by both general users and companies. For example, using the output system 50 eliminates the need for a company to build an in-house file server environment and enables the company to increase and decrease the storage capacity as needed.

Examples of the output apparatus 30 include a printer, an image forming apparatus, an image processing apparatus, a copier, a multifunction apparatus, and a multi-function peripheral/product/printer (MFP) that execute print jobs. In the present embodiment, the output apparatus 30 needs to include at least a printer function.

Also, the output apparatus 30 may be an apparatus including a function for outputting data other than the printer function. Examples of such apparatuses include a projector, a head up display (HUD), an electronic blackboard, and a digital signage. In this case, the output apparatus 30 outputs (displays or plays) data such as a video, a document, or music obtained from the output system 50.

Further, the output apparatus 30 is not limited to a printer and may be any apparatus including a communication function. Other examples of the output apparatus 30 include an industrial machine, an imaging device, a sound collector, a medical device, a network home appliance, an automobile (Connected Car), a notebook personal computer (PC), a mobile phone, a smartphone, a tablet terminal, a game machine, a personal digital assistant (PDA), a digital camera, a wearable PC, and a desktop PC.

### <HARDWARE CONFIGURATION>

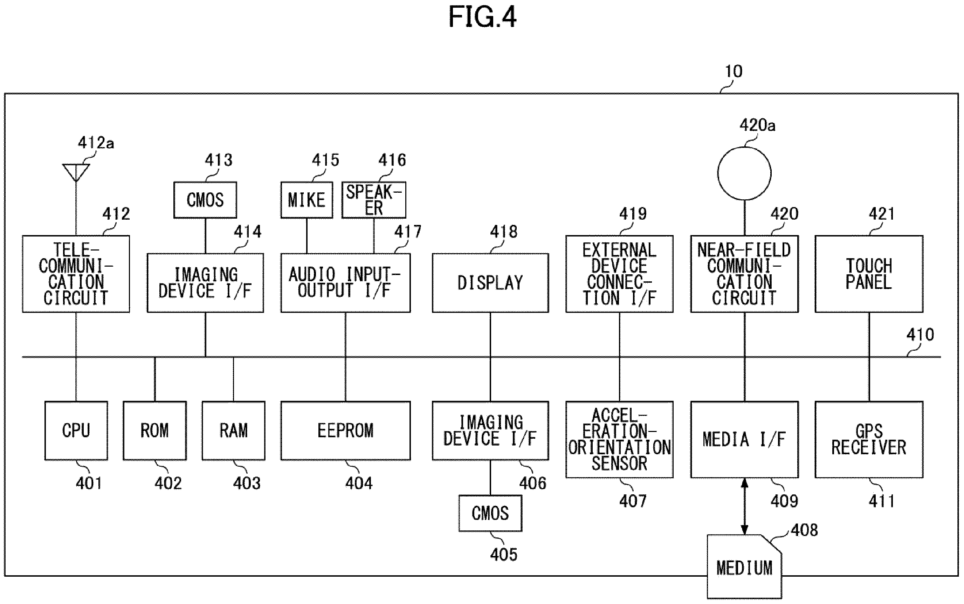

Next, hardware configurations of the information processing system 1 are described with reference to FIGs. 4 through 6.

### <<INFORMATION PROCESSING APPARATUS>>

FIG. 4 illustrates a hardware configuration of the information processing apparatus 10. As illustrated in FIG. 4, the information processing apparatus 10 includes a CPU 401, a ROM 402, a RAM 403, an EEPROM 404, a CMOS sensor 405, an imaging device I/F 406, an acceleration-orientation sensor 407, a media I/F 409, and a GPS receiver 411.

The CPU 401 controls operations of the entire information processing apparatus 10. The ROM 402 stores a program such as an initial program loader (IPL) for driving the CPU 401. The RAM 403 is used as a work area for the CPU 401. The EEPROM 404 reads or writes various types of data such as programs (applications) for the information processing apparatus 10 under the control of the CPU 401. The CMOS (Complementary Metal Oxide Semiconductor) sensor 405 is a type of a built-in imaging device that captures an image of an object (mainly a self-portrait) and obtains image data under the control of the CPU 401. Instead of the CMOS sensor 405, an imaging device such as a charge coupled device (CCD) sensor may be used. The imaging device I/F 406 is a circuit that controls the CMOS sensor 405. The acceleration-orientation sensor 407 includes various sensors such as an electromagnetic compass that detects geomagnetism, a gyro compass, and an acceleration sensor. The media I/F 409 controls reading and writing (storing) of data from and to a recording medium 408 such as a flash memory. The GPS receiver 411 receives GPS signals from GPS satellites.

The information processing apparatus 10 also includes a telecommunication circuit 412, a CMOS sensor 413, an imaging device I/F 414, a microphone (mike) 415, a speaker 416, an audio input-output I/F 417, a display 418, an external device connection interface (I/F) 419, a near-field communication circuit 420, an antenna 420a of the near-field communication circuit 420, and a touch panel 421.

The telecommunication circuit 412 is a circuit that communicates with other apparatuses via the network N1. The CMOS sensor 413 is a type of built-in imaging device that captures image data of an object under the control of the CPU 401. The imaging device I/F 414 is a circuit that controls the CMOS sensor 413. The microphone 415 is a built-in circuit that converts sound into an electric signal. The speaker 416 is a built-in circuit that converts an electric signal into physical vibration to produce sounds such as music and voice. The audio input-output I/F 417 is a circuit that processes input and output of sound signals to and from the microphone 415 and the speaker 416 under the control of the CPU 401. The display 418 is a type of display unit such as a liquid crystal display or an organic electroluminescent (EL) display for displaying an image of an object and various icons. The external device connection I/F 419 is an interface for connecting various external devices. The near-field communication circuit 420 is a communication circuit using a technology such as near field communication (NFC) or Bluetooth (registered trademark). The touch panel 421 is a type of input unit that enables the user to operate the information processing apparatus 10 by pressing the display 418.

The information processing apparatus 10 also includes a bus line 410. The bus line 410 is, for example, an address bus or a data bus for electrically connecting the components such as the CPU 401 illustrated in FIG. 4 with each other.

### <<OUTPUT SYSTEM>>

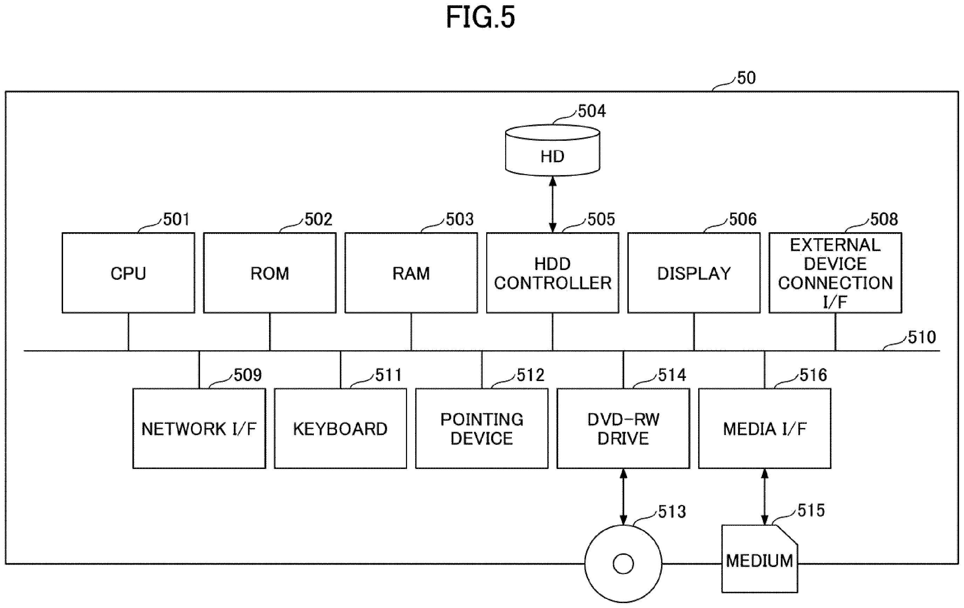

FIG. 5 illustrates a hardware configuration of the output system 50. As illustrated in FIG. 5, the output system 50 is implemented by a computer and includes a CPU 501, a ROM 502, a RAM503, an HD 504, a hard disk drive (HDD) controller 505, a display 506, an external device connection interface (I/F) 508, a network I/F 509, a bus line 510, a keyboard 511, a pointing device 512, a digital versatile disk rewritable (DVD-RW) drive 514, and a media I/F 516.

The CPU 501 controls the operations of the entire output system 50. The ROM 502 stores programs such as an IPL for driving the CPU 501. The RAM 503 is used as a work area for the CPU 501. The HD 504 stores various types of data such as programs. The HDD controller 505 controls reading and writing of various types of data from and to the HD 504 under the control of the CPU 501. The display 506 displays various information items such as a cursor, menus, windows, characters, and images. The external device connection I/F 508 is an interface for connecting various external devices. Examples of external devices include an universal serial bus (USB) memory and a printer. The network I/F 509 is an interface for data communications via the networks N1 and N3. The bus line 510 is, for example, an address bus or a data bus for electrically connecting components such as the CPU 501 illustrated in FIG. 5 with each other.

The keyboard 511 is an example of an input unit including multiple keys for inputting characters, numerical values, and various instructions. The pointing device 512 is an example of an input unit for selecting and executing various instructions, selecting an object, and moving a cursor. The DVD-RW drive 514 controls reading and writing of various types of data from and to a DVD-RW 513, which is an example of a removable recording medium. The DVD-RW drive 514 may support not only a DVD-RW but also other recording media such as a DVD-R. The media I/F 516 controls reading and writing (storing) of data from and to a recording medium 515 such as a flash memory.

### <<OUTPUT APPARATUS>>

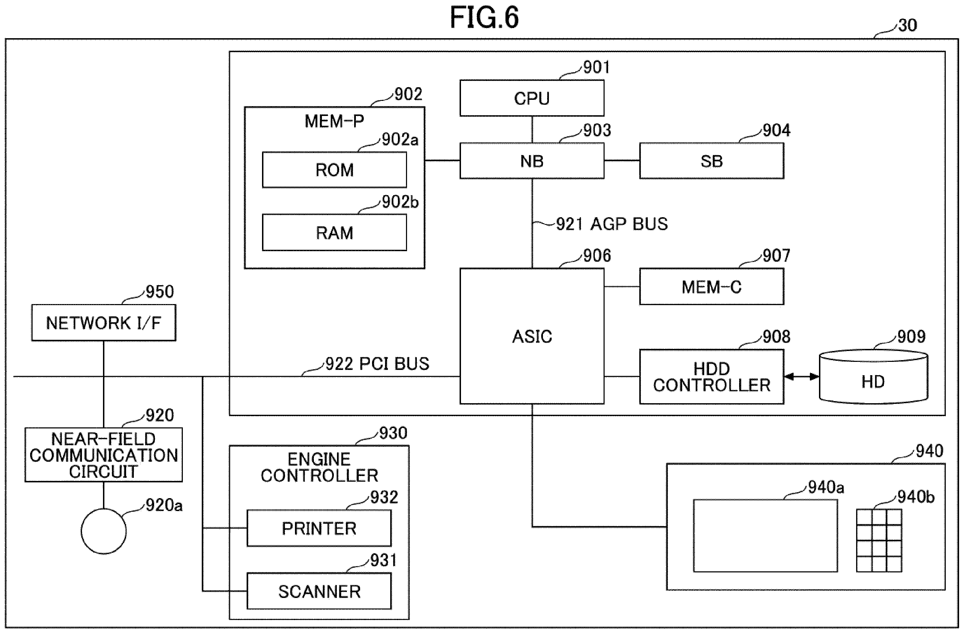

FIG. 6 illustrates a hardware configuration of the output apparatus 30. In FIG. 6, it is assumed that the output apparatus 30 is an image forming apparatus. As illustrated in FIG. 6, the output apparatus 30 includes a controller 910, a near-field communication circuit 920, an engine controller 930, an operations panel 940, and a network I/F 950.

The controller 910 includes a CPU 901 that is a main component of a computer, a system memory (MEM-P) 902, a north bridge (NB) 903, a south bridge (SB) 904, an application specific integrated circuit (ASIC) 906, a local memory (MEM-C) 907 that is a storage, an HDD controller 908, an HD 909 that is a storage, and an accelerated graphics port (AGP) bus 921 connecting the NB 903 to the ASIC 906.

The CPU 901 is a controller that controls the entire output apparatus 30. The NB 903 is a bridge for connecting the CPU 901, the MEM-P 902, the SB 904, and the AGP bus 921 to each other, and includes a memory controller for controlling reading and writing of data from and to the MEM-P 902, a peripheral component interconnect (PCI) master, and an AGP target.

The MEM-P 902 includes a ROM 902a that is a memory for storing programs and data for implementing functions of the controller 910, and a RAM 902b that is used, for example, to load programs and data and as a drawing memory for memory printing. The programs stored in the RAM 902b may be provided as installable or executable files recorded in a computer-readable recording medium such as a CD-ROM, a CD-R, or a DVD.

The SB 904 is a bridge for connecting the NB 903 to PCI devices and peripheral devices. The ASIC 906 is an integrated circuit (IC) for image processing and includes hardware components for image processing. The ASIC 906 functions as a bridge that connects the AGP bus 921, the PCI bus 922, the HDD controller 908, and the MEM-C 907 to each other. The ASIC 906 includes a PCI target, an AGP master, an arbiter (ARB) that is the core of the ASIC 906, a memory controller that controls the MEM-C 907, multiple direct memory access controllers (DMAC) that, for example, rotate image data using hardware logic, and a PCI unit that performs data transfer between a scanner 931 and a printer 932 via the PCI bus 922. A universal serial bus (USB) interface and/or an IEEE1394 (Institute of Electrical and Electronics Engineers 1394) interface may be connected to the ASIC 906.

The MEM-C 907 is a local memory used as an image buffer for copying and a code buffer. The HD 909 is a storage for storing image data, font data used for printing, and forms. The HDD controller 908 controls reading and writing of data from and to the HD 909 under the control of the CPU 901. The AGP bus 921 is a bus interface for a graphics accelerator card proposed to speed up graphics processing. The AGP bus 921 enables direct access to the MEM-P 902 at high throughput, and can increase the speed of the graphics accelerator card.

The near-field-communication circuit 920 is provided with a near-field-communication circuit antenna 920a. The near-field-communication circuit 920 is, for example, a communication circuit for NFC or Bluetooth (registered trademark).

Further, the engine controller 930 includes the scanner 931 and the printer 932. The operations panel 940 includes a panel display 940a such as a touch panel that displays, for example, current settings and a selection screen and receives inputs from an operator, and hardware keys 940b including a numeric keypad for receiving settings of conditions related to image forming such as density settings and a start key for receiving a copy start instruction. The controller 910 controls the entire output apparatus 30. For example, the controller 910 controls drawing, communications, and inputs from the operations panel 940. Each of the scanner 931 and the printer 932 includes an image processor for error diffusion and gamma conversion.

An application switching key of the operations panel 940 enables the user to sequentially switch and select a document box function, a copy function, a printer function, and a facsimile function of the output apparatus 30. The output apparatus 30 transitions to a document box mode when the document box function is selected, to a copy mode when the copy function is selected, to a printer mode when the printer function is selected, and to a facsimile mode when the facsimile function is selected.

The network I/F 950 is an interface for data communications using the network N3. The near-field communication circuit 920 and the network I/F 950 are electrically connected to the ASIC 906 via the PCI bus 922.

### <FUNCTIONS OF INFORMATION PROCESSING SYSTEM>

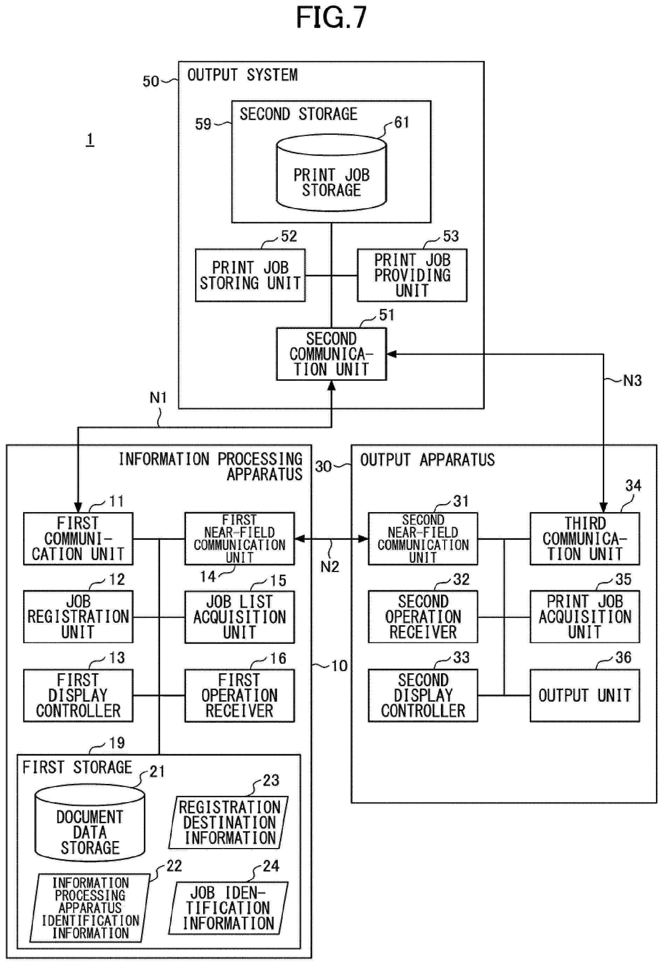

Next, functions provided by the information processing system 1 are described with reference to FIG. 7. FIG. 7 is a block diagram illustrating functional configurations of the information processing apparatus 10, the output system 50, and the output apparatus 30 of the information processing system 1.

### <<FUNCTIONS OF INFORMATION PROCESSING APPARATUS>>

The information processing apparatus 10 includes a first communication unit 11, a job registration unit 12, a first display controller 13, a first near-field communication unit 14, a job list acquisition unit 15, and a first operation receiver 16. Each of these functional units of the information processing apparatus 10 is implemented by causing one or more of the components illustrated in FIG. 4 to operate according to an instruction from the CPU 401 executing a program (an application or a web browser) loaded from the EEPROM 404 to the RAM 403.

The first communication unit 11 connects to the network N1 and uses registration destination information 23 stored in a first storage 19 to communicate with the output system 50. The registration destination information 23 indicates a destination where print jobs are to be registered. Details are explained with Table 2. As described above, the first communication unit 11 connects to a public line (3G/4G/LTE, etc.) or a wireless LAN, and sends print jobs to the output system 50. Print jobs may be transmitted via not only a wireless network but also a wired network such as a wired LAN. Also, the first communication unit 11 receives a list of print jobs from the output system 50.

The job registration unit 12 sends document data to the output system 50 as a print job to be printed by the output apparatus 30. When a print job includes document data and print settings, the job registration unit 12 sends print settings set by the user or default print settings together with the document data. However, in the present embodiment, the information processing apparatus 10 may transmit only document data as a print job to the output system 50. In this case, when the print job is printed, print settings are specified by the user on the information processing apparatus 10 or the output apparatus 30, or default print settings are used.

The job list acquisition unit 15 sends the information processing apparatus identification information 22 to the output system 50 via the first communication unit 11 to obtain a list of print jobs associated with the information processing apparatus identification information 22 from the output system 50.

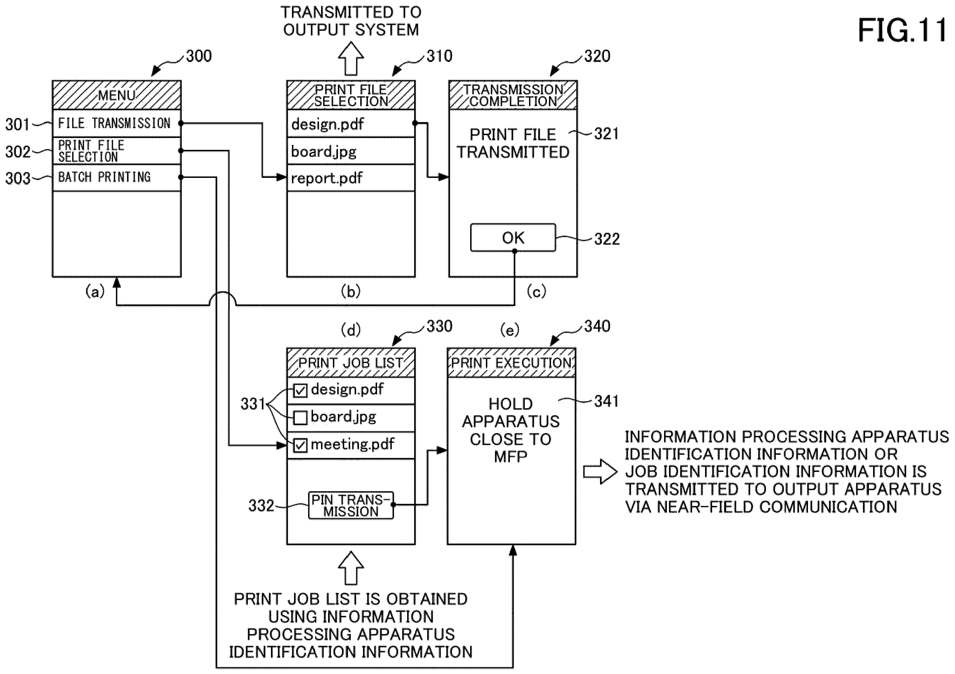

The first display controller 13 generates user interface (Ul) screens and displays the screens on the display 418. Examples of screens are illustrated in FIGs. 11 through 13. When executing an application, the information processing apparatus 10 generates a screen by arranging predetermined layout components and information items obtained from the output system 50. When executing a web browser, the information processing apparatus 10 analyzes screen information sent from the output system 50 and displays the screen information on the display 418.

The first operation receiver 16 receives various operations on the information processing apparatus 10. For example, the first operation receiver 16 receives, from the user, instructions such as selection of document data to be registered as a print job, batch printing, and selection of a print job to be executed.

The first near-field communication unit 14 communicates with the output apparatus 30 via near-field communication (e.g., NFC/Bluetooth (registered trademark)/Bluetooth (registered trademark) LE, infrared communication, or visible light communication). Information may also be transmitted to the output apparatus 30 by causing the output apparatus 30 to read a bar code such as a QR code (registered trademark) or a two-dimensional bar code.

Also, the information processing apparatus 10 includes the first storage 19 comprised of one or more of the EEPROM 404, the RAM 403, and the ROM 402 illustrated in FIG. 4. In the first storage 19, a document data storage 21 is formed, and the information processing apparatus identification information 22, the registration destination information 23, and the job identification information 24 are stored. The document data storage 21 stores document data generated by the user and/or document data obtained from, for example, the Internet. The document data storage 21 may also be provided on the network. Document data selected by the user is registered in the output system 50 as a print job.

The information processing apparatus identification information 22, the registration destination information 23, and the job identification information 24 are described with reference to Tables 1 through 3.

**[TABLE 1]**

| INFORMATION INFORMATION | PROCESSING | APPARATUS | IDENTIFICATION |
|---|---|---|---|
| 550e8400-e29b-41 d4-a716-446655440000 | | | |

Table 1 indicates an example of the information processing apparatus identification information 22. The information processing apparatus identification information 22 identifies the information processing apparatus 10. In the example of Table 1, a UUID is used as the information processing apparatus identification information 22. Assuming that the user generally carries a dedicated information processing apparatus 10, the information processing apparatus identification information 22 can be said to be the identification information of the user who registered the print job. In the present embodiment, the information processing apparatus identification information 22 may also be referred to as "related job specification information".

Instead of a UUID or a MAC address, the information processing apparatus identification information 22 may be a fixed IP address, information on a subscriber identity module (SIM) card, a manufacturing number, or a serial number. Any number unique to the information processing apparatus 10 may be used. Because the information processing apparatus identification information 22 represents the identity of the information processing apparatus 10, the same information processing apparatus identification information 22 is continuously used (at least not changed frequently).

**[TABLE 2]**

| | |
|---|---|
| Output System ID | 12345 |
| URL | https:// ... |
| User Name | ichiro |
| Password | ***** |

Table 2 indicates an example of the registration destination information 23. The registration destination information 23 includes a destination in which print jobs are to be registered. As an example, the registration destination information 23 includes an output system ID, a URL, a user name, and a password. The output system ID identifies the output system 50. That is, the output system ID is information for uniquely identifying the output system 50. Here, an ID may be a combination of a name, a code, a character string, and numerical values used to uniquely identify a specific object among multiple objects, and may be referred to as identification information.

The URL is information that indicates the location of a resource such as a file or a service accessible on the network and a communication method. The URL may include address information indicating the location of a resource. In the present embodiment, the URL includes the address of the output system 50. The user name and the password are login information used by the user to log into the output system 50. However, login information is not essential. The login information may be used for authentication by an authentication server in a second embodiment.

**[TABLE 3]**

| JOB IDENTIFICATION INFORMATION |
|---|
| 1234 |

Table 3 indicates an example of the job identification information 24. The job identification information 24 identifies a print job, and is represented by a four-digit number in the example of Table 3. The job identification information 24 is formed of a relatively small number of digits such that the user can manually enter the numbers. However, to avoid duplication or to prevent print jobs from being stolen by a brute force attack, the job identification information 24 may be formed of 5 to 10 digits.

The job identification information 24 is overwritten each time the user registers a print job. That is, only the job identification information 24 of the most-recently registered print job is stored. With this configuration, the information processing apparatus 10 can send the print job registered most recently in the output system 50 to the output apparatus 30 and execute the print job.

Because the job identification information 24 of each print job is stored in the output system 50, the information processing apparatus 10 can obtain the job identification information 24 of each print job by sending the information processing apparatus identification information 22 to the output system 50. However, the information processing apparatus 10 may also store the job identification information 24 in association with each print job.

### <<OUTPUT SYSTEM>>

Next, functions of the output system 50 are described. The output system 50 includes a second communication unit 51, a print job storing unit 52, and a print job providing unit 53. Each of these functional units of the output system 50 is implemented by causing one or more of the components illustrated in FIG. 5 to operate according to an instruction from the CPU 501 executing a program loaded from the HD 504 to the RAM 503.

The second communication unit 51 connects to the network N1 or N3 to send and receive various types of data to and from the information processing apparatus 10 and the output apparatus 30. In the present embodiment, the output system 50 receives print jobs mainly from the information processing apparatus 10 and sends the print jobs to the output apparatus 30. Because the output system 50 is present in, for example, a data center, the second communication unit 51 is connected to, for example, a high-speed LAN. Accordingly, the output system 50 is not directly connected to a public line and communicates with the information processing apparatus 10 via a gateway of a telephone company.

The print job storing unit 52 stores a print job received by the second communication unit 51 from the information processing apparatus 10 in the print job storage 61. The print job storing unit 52 assigns the job identification information 24 to the print job, and stores the job identification information 24 in association with, for example, a file name of the print job.

When the second communication unit 51 receives a print job request including the information processing apparatus identification information 22 or the job identification information 24 from the output apparatus 30, the print job providing unit 53 obtains one or more print jobs associated with the information processing apparatus identification information 22 or the job identification information 24 from the print job storage 61 and sends the obtained print job(s) to the output apparatus 30 via the second communication unit 51.

Further, the output system 50 includes a second storage 59 comprised of one or more of the HD 504, the RAM 503, and the ROM 502 illustrated in FIG. 5. A print job storage 61 is formed in the second storage 59. Table 4 indicates information stored in the print job storage 61.

**[TABLE 4]**

| File Name | Job Identification Information | Information Processing Apparatus Identification information | File URL |
|---|---|---|---|
| xxxx.pdf | 1234 | AAAAAAAA | https://zzz/files/x xxx.pdf |
| yyyy.pdf | 3456 | AAAAAAAA | https://zzz/files/y yyy.pdf |
| zzzz.pdf | 5678 | BBBBBBBB | https://zzz/files/z zzz.pdf |

Table 4 indicates an example of print job information stored in the print job storage 61. The print job information includes a file name, the job identification information 24, the information processing apparatus identification information 22, and a file URL.

File name ... The file name of document data.

Job identification information 24 ... A number generated by the output system 50 for each print job.

Information processing apparatus identification information 22 ... Information generated and set by the information processing apparatus 10, or information generated by the output system 50 and sent to the information processing apparatus 10.

File URL ... Information that Indicates a location (address on the network) where document data is stored. The print job storage 61 may store a file path or document data itself.

### <<OUTPUT APPARATUS>>

Next, functions of the output apparatus 30 are described. The output apparatus 30 includes a second near-field communication unit 31, a second operation receiver 32, a second display controller 33, a third communication unit 34, a print job acquisition unit 35, and an output unit 36. Each of these functional units of the output apparatus 30 is implemented by causing one or more of the components illustrated in FIG. 6 to operate according to an instruction from the CPU 901 executing a program loaded from the HD 909 to the RAM 902b.

The second near-field communication unit 31 connects to the network N2 and communicates with the information processing apparatus 10 via near-field communication (NFC/Bluetooth (registered trademark)/Bluetooth (registered trademark) LE, etc.). The second near-field communication unit 31 periodically transmits a radio signal indicating its presence to the surrounding area. When the information processing apparatus 10 approaches the range of the radio signal and detects the radio signal, communication is automatically started between the first near-field communication unit 14 of the information processing apparatus 10 and the second near-field communication unit 31. In the present embodiment, the output apparatus 30 receives the information processing apparatus identification information 22 or the job identification information 24 from the information processing apparatus 10.

The second operation receiver 32 receives various operations on the output apparatus 30. For example, when the user manually inputs the job identification information 24, the second operation receiver 32 receives the input job identification information 24.

When print jobs obtained from the output system 50 are to be printed, the second display controller 33 displays a screen for receiving an input of the job identification information 24, a screen for guiding user operations, and a screen for reporting the status on the operations panel.

The third communication unit 34 sends and receives various types of data to and from the output system 50 via the network N3. In the present embodiment, the third communication unit 34 sends the information processing apparatus identification information 22 or the job identification information 24 and receives a print job(s).

The print job acquisition unit 35 sends the information processing apparatus identification information 22 or the job identification information 24 to the output system 50 via the third communication unit 34, and obtains one or more print jobs associated with the information processing apparatus identification information 22 or the job identification information 24 from the output system 50.

The output unit 36 prints document data on a sheet material such as paper by executing the print job obtained by the print job acquisition unit 35. Here, printing may also be referred to as outputting.

### <PROCESSES>

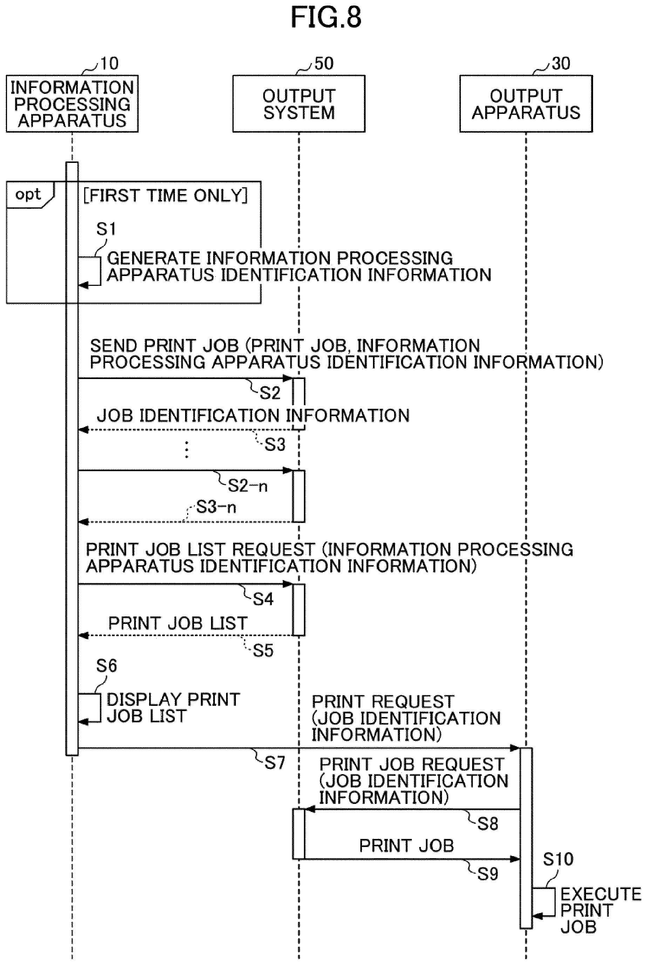

Next, with reference to FIG. 8 and FIG. 11, a process of registering a print job in the output system 50 by the information processing apparatus 10 and executing the print job by the output apparatus 30 is described. FIG. 8 is a sequence chart illustrating an example of a process where the information processing apparatus 10 registers a print job in the output system 50, sends the job identification information 24 to the output apparatus 30, and the output apparatus 30 executes the print job. FIG. 11 illustrates an example of transition of screens of an application running on the information processing apparatus 10.

S1: When, for example, an application for registering a print job is installed in the information processing apparatus 10, the application generates the information processing apparatus identification information 22 and stores the information processing apparatus identification information 22 in the first storage 19. Instead of at the installation of the application, the information processing apparatus identification information 22 may be generated when the application is started for the first time after the installation. Accordingly, step S1 needs to be performed only once for the installed application.

S2: To register a print job in the output system 50, the user operates the information processing apparatus 10 and starts the application. As a result, a menu screen 300 is displayed (FIG. 11 (a)). The user presses a file transmission button 301 on the menu screen 300. As a result, the menu screen 300 transitions to a print file selection screen 310 (FIG. 11 (b)). Document data files stored in the document data storage 21 are displayed on the print file selection screen 310. The user operates the print file selection screen 310 to select a document data file to be sent to the output system 50. The first operation receiver 16 receives the selection of the document data file. When the user performs an operation to send a print job (in FIG. 11 (b), the selection of a document data file corresponds to this operation, but a send button may be pressed additionally), the first communication unit 11 connects to the network N1 by using the registration destination information 23, and the job registration unit 12 sends the print job and the information processing apparatus identification information 22 to the output system 50. As a result, the print file selection screen 310 transitions to a transmission completion screen 320 (FIG. 11 (c)). The transmission completion screen 320 returns to the menu screen 300 when the user presses an OK button 322 (FIG. 11 (a)).

S3: The second communication unit 51 of the output system 50 receives the print job and the information processing apparatus identification information 22, and the print job storing unit 52 assigns the job identification information 24 to the print job and stores print job information in the print job storage 61. The second communication unit 51 of the output system 50 sends the job identification information 24 to the information processing apparatus 10.

The first communication unit 11 of the information processing apparatus 10 receives the job identification information 24 as a response to the transmission of the print job, and the job registration unit 12 stores the job identification information 24 in the first storage 19. Through the above process, the print job is registered in the output system 50.

S2-n and S3-n: The user registers print jobs in the output system 50 repeatedly or multiple times. Each time a print job is registered, the information processing apparatus 10 sends the same information processing apparatus identification information to the output system 50. Also, the output system 50 sends job identification information to the information processing apparatus 10 each time a print job is registered.

S4: Next, a process where the user executes a print job on the output apparatus 30 is described. The user can perform the following operations.
(i) To print a most-recently registered print job by specifying the job identification information 24 (near-field communication or manual input).
(ii) To print one or more print jobs selected from a list of print jobs (near-field communication or manual input).
(iii) To print all registered print jobs (batch printing) (mainly by near-field communication).

In the case of (i), because the job identification information 24 is stored in the information processing apparatus 10, the information processing apparatus 10 may send the job identification information 24 to the output apparatus 30. The user performs this operation on a screen of the application, and step S7 and subsequent steps are performed. In the case of (ii) or (iii), the information processing apparatus 10 sends the information processing apparatus identification information 22 to the output system 50 to obtain a list of print jobs. In FIG. 8, a list of print jobs is displayed in the case of (ii) or (iii).

When the first operation receiver 16 of the information processing apparatus 10 receives an operation by the user to obtain a list of print jobs (pressing a print file selection button 302 on the menu screen 300 of FIG. 11 (a)), the job list acquisition unit 15 sends a print job list acquisition request with the information processing apparatus identification information 22 to the output system 50 via the first communication unit 11.

S5: The second communication unit 51 of the output system 50 receives the information processing apparatus identification information 22 and the print job list acquisition request, and the print job providing unit 53 obtains a list of all print jobs associated with the information processing apparatus identification information 22 from the print job storage 61 and sends the list of print jobs to the information processing apparatus 10 via the second communication unit 51. The job list acquisition unit 15 of the information processing apparatus 10 receives the list of print jobs via the first communication unit 11.

S6: The first display controller 13 displays the list of print jobs on the display 418 (FIG. 11 (d)). The list of print jobs includes the job identification information 24. The job identification information 24 may not be displayed, or may be displayed in response to a user operation.

Also, instead of sending the list of print jobs in response to a user operation, the output system 50 may automatically send the list of print jobs when the print jobs are registered. Also, instead of obtaining the list of print jobs from the output system 50, the information processing apparatus 10 may be configured to store job identification information each time the job identification information is received at step S3 and generate a list of print jobs based on sets of the stored job identification information.

S7: The user can print a selected print job on the output apparatus 30. Also, although it is not clear from the transition of screens, the user may be able to print all of the print jobs in a batch even when the list of print jobs is displayed.

Here, a case where the user selects and prints each print job is described. When the user selects a print job and performs an operation to start printing (press a PIN transmission button 332 in FIG. 11 (d)), the first operation receiver 16 receives the operation, and the first near-field communication unit 14 sends a print request to the output apparatus 30 together with the job identification information 24 of the selected print job. As described above, the user is close enough to the output apparatus 30 so that the information processing apparatus 10 and the output apparatus 30 can communicate with each other via near-field communication. If the output apparatus 30 is being used by another user, the user cannot come close to the output apparatus 30. Therefore, the communication distance (radio field strength) is designed such that near-field communication is not possible when the user is not close to the output apparatus 30. Also, the user may manually input the job identification information 24 to the output apparatus 30. When the PIN transmission button 332 is pressed, the print job list screen 330 transitions to a print execution screen 340 (FIG. 11 (e)).

S8: The second near-field communication unit 31 of the output apparatus 30 receives the print request together with the job identification information 24. In response to the print request, the print job acquisition unit 35 sends a print job request with the job identification information 24 to the output system 50 via the third communication unit 34.

S9: The second communication unit 51 of the output system 50 receives the job identification information 24 and the print job request, and the print job providing unit 53 obtains all print jobs associated with the job identification information 24 from the print job storage 61. The second communication unit 51 sends a list of one or more print jobs to the output apparatus 30. The list of print jobs does not necessarily include document data. Only the list of print jobs may be transmitted first, and document data may be transmitted each time the output apparatus 30 executes a print job.

S10: The third communication unit 34 of the output apparatus 30 receives the list of print jobs, and the output unit 36 sequentially executes all of the print jobs to output printed matter.

Thus, in the present embodiment, the information processing apparatus 10 obtains and displays a list of print jobs stored in the output system 50 by using the information processing apparatus identification information 22 as related job specification information so that the user can determine print jobs stored in the output system 50. Also, the user can separately print a print job selected from the list of print jobs.

### <<BATCH PRINTING>>

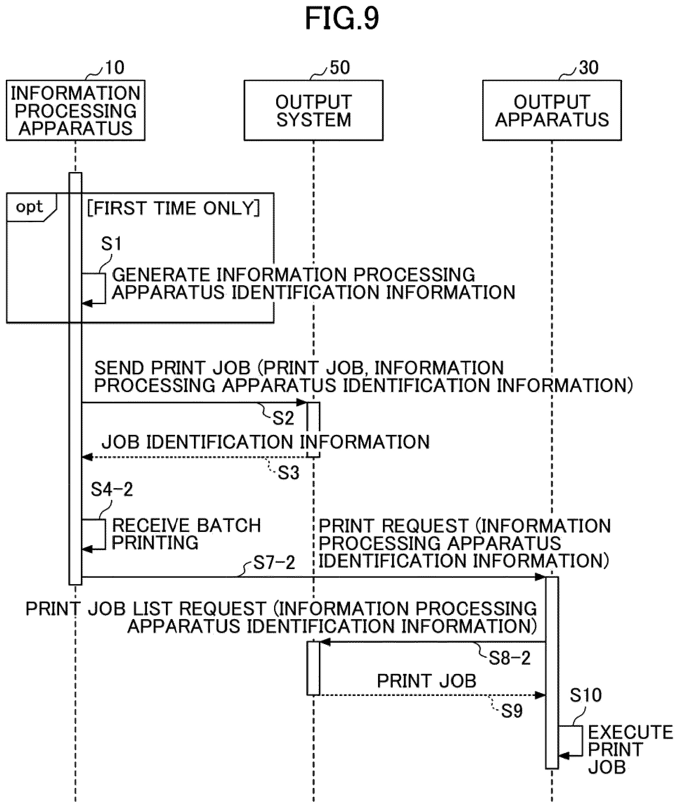

Next, referring to FIG. 9, a process where the information processing apparatus 10 prints print jobs in a list of print jobs in a batch is described. FIG. 9 is a sequence chart illustrating an example of a process where the information processing apparatus 10 registers print jobs in the output system 50, sends the information processing apparatus identification information 22 to the output apparatus 30, and the output apparatus 30 executes the print jobs. Below, differences between FIG. 8 and FIG. 9 are mainly described.

Steps S1 through S3 are substantially the same as those in FIG. 8. S4-2: The first operation receiver 16 of the information processing apparatus 10 receives an operation (batch printing operation) by the user to print all print jobs (pressing a batch printing button 303 on the menu screen 300 of FIG. 11 (a)). In this case, the list of print jobs is not obtained nor displayed. However, the list of print jobs may be displayed by steps similar to those in FIG. 8.

S7-2: When the user performs an operation to print all print jobs in a batch, the first operation receiver 16 receives the operation, and the first near-field communication unit 14 sends a print request to the output apparatus 30 together with the information processing apparatus identification information 22.

S8-2: The second near-field communication unit 31 of the output apparatus 30 receives the print request together with the information processing apparatus identification information 22. In response to the print request, the print job acquisition unit 35 sends a print job list request with the information processing apparatus identification information 22 to the output system 50 via the third communication unit 34.

S9: The second communication unit 51 of the output system 50 receives the print job list request and the information processing apparatus identification information 22, and the print job providing unit 53 obtains all print jobs associated with the information processing apparatus identification information 22 from the print job storage 61. The second communication unit 51 sends a list of print jobs to the output apparatus 30.

S10: The third communication unit 34 of the output apparatus 30 receives the list of print jobs, and the output unit 36 sequentially executes all print jobs in the list to output printed matter.

Thus, in the present embodiment, the information processing apparatus 10 sends the information processing apparatus identification information 22 as related job specification information to the output apparatus 30, and the output apparatus 30 can print print jobs stored in the output system 50 in a batch.

### <<OTHER EXAMPLES OF SCREEN TRANSITION>>

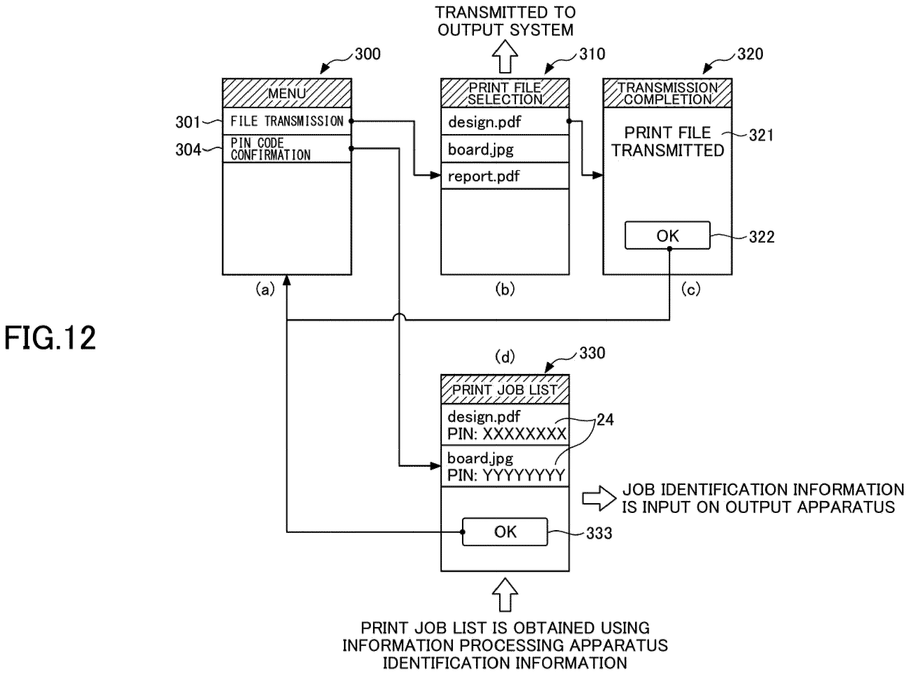

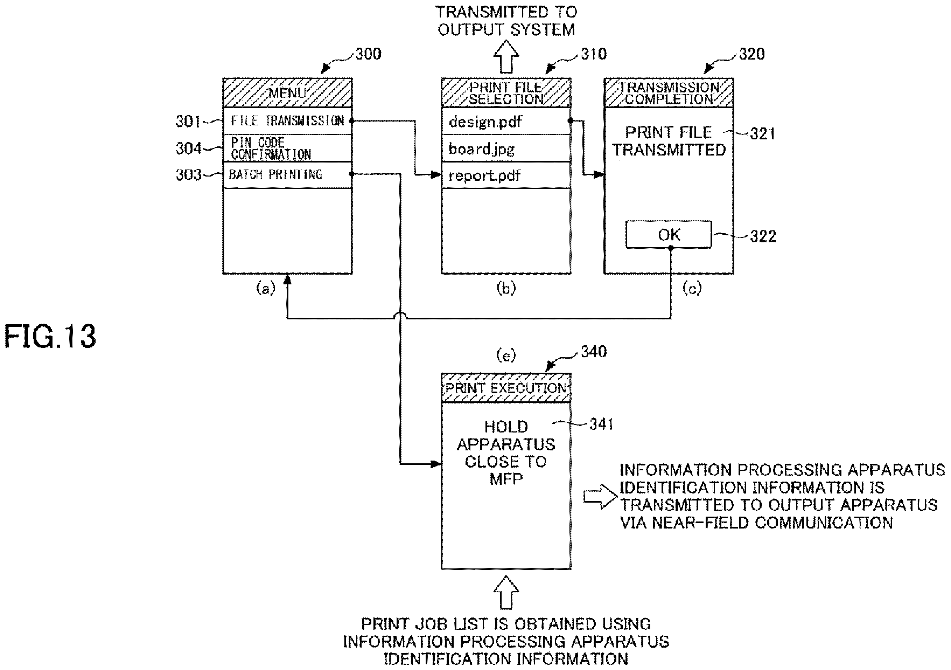

The processes of FIG. 8 and FIG. 9 are described based mainly on the screen transition illustrated in FIG. 11. However, the application may also adopt screen transitions illustrated in FIG. 12 and FIG. 13. The sequence charts of FIG. 8 and FIG. 9 may also be applied to the screen transitions illustrated in FIG. 12 and FIG. 13. Here, a supplementary explanation of a manual input method illustrated in FIG. 12 is provided.

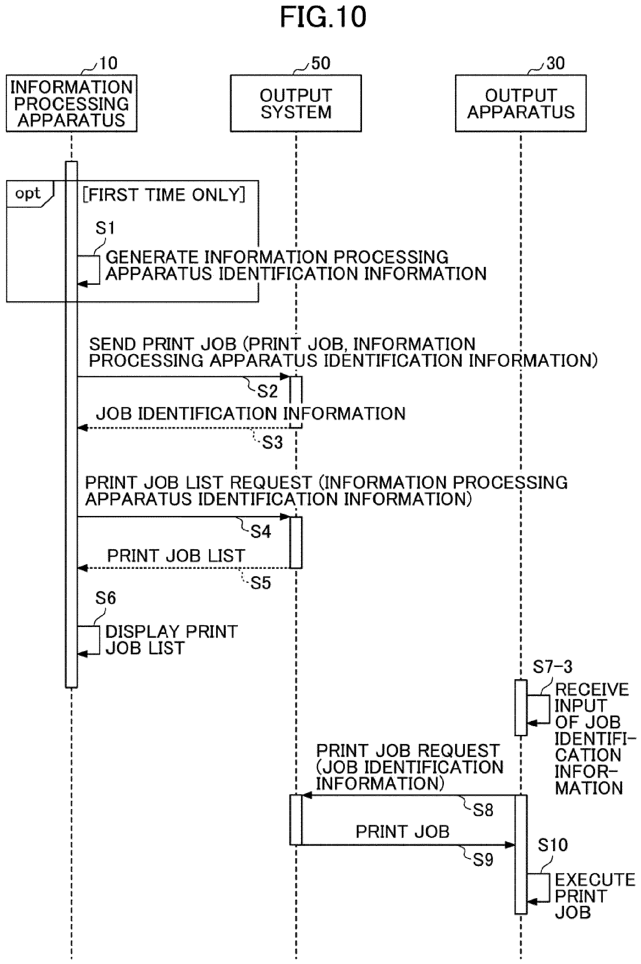

FIG. 10 illustrates a process performed when a PIN code confirmation button is pressed on the menu screen 300 of FIG. 12 (a). FIG. 10 is a sequence chart illustrating an example of a process where the information processing apparatus 10 registers a print job in the output system 50, the user manually inputs job identification information to the output apparatus 30, and the output apparatus 30 executes the print job. Below, differences between the processes of FIG. 10 and FIG. 8 are mainly described.

In the process of FIG. 10, step S7 is no longer necessary, and step S7-3 is performed.
S7-3: The user manually inputs a print job confirmed on the print job list screen 330 of FIG. 12 (d) to the output apparatus 30. Subsequent steps are substantially the same as those in FIG. 8.

Also, when the PIN code confirmation button 304 is pressed on the menu screen 300 of FIG. 13, the same process as in FIG. 8 is performed; and when the batch printing button 303 is pressed on the menu screen 300 of FIG. 13, the same process as in FIG. 9 is performed.

### <<EXAMPLES OF SCREENS>>

FIGs. 11 through 13 are drawings illustrating the transitions of screens of the application displayed by the information processing apparatus 10 on the display 418. Here, it is assumed that the information processing apparatus identification information 22 has already been generated. Below, the following three cases are described separately: a case where the information processing apparatus 10 sends the job identification information 24 of each print job or the information processing apparatus identification information 22 to the output apparatus 30 (FIG. 11), a case where the user manually inputs the job identification information 24 of a print job to the output apparatus 30 (FIG. 12), and a case where the information processing apparatus 10 sends the information processing apparatus identification information 22 to the output apparatus 30 (FIG. 13).

FIG. 11 illustrates an example of screen transition in a case where the information processing apparatus 10 sends the job identification information 24 of a selected print job or the information processing apparatus identification information 22 via near-field communication.

FIG. 11 (a) is an example of the menu screen 300. For example, the menu screen 300 is displayed immediately after the user starts the application. The menu screen 300 includes the file transmission button 301, the print file selection button 302, and the batch printing button 303. The file transmission button 301 is pressed when the user intends to register a print job in the output system 50. The print file selection button 302 is pressed when the user intends to obtain a list of print jobs from the output system 50 and display the list of print jobs. The batch printing button 303 is pressed when user intends to print all print jobs of the user registered in the output system 50 in a batch. When the file transmission button 301 is pressed on the menu screen 300, the menu screen 300 transitions to the print file selection screen 310 of FIG. 11 (b).

FIG. 11 (b) is an example of the print file selection screen 310. The print file selection screen 310 is a screen that displays a list of document data files stored in the document data storage 21. In FIG. 11 (b), the file names of three document data files are displayed. The document data files are individually selectable. In FIG. 11 (b), the first document data file is selected. When a document data file is selected, the print file selection screen 310 transitions to the transmission completion screen 320 of FIG. 11 (c). When a document data file is selected on the print file selection screen 310, the information processing apparatus identification information 22 and the document data file are sent to the output system 50, and the information processing apparatus 10 receives the job identification information 24.

FIG. 11 (c) is an example of the transmission completion screen 320. The transmission completion screen 320 includes, for example, a message 321 "Print file transmitted" and an OK button 322. When the user presses the OK button 322, the transmission completion screen 320 returns to the menu screen 300 of FIG. 11 (a). When the print file selection button 302 is pressed on the menu screen 300, the menu screen 300 transitions to the print job list screen 330 of FIG. 11 (d). Here, when the print file selection button 302 is pressed, the information processing apparatus 10 sends the information processing apparatus identification information 22 to the output system 50 and obtains a list of print jobs.

FIG. 11 (d) is an example of the print job list screen 330. The print job list screen 330 displays a list of print jobs. That is, all print jobs registered in the output system 50 in association with the information processing apparatus identification information 22 are displayed. A selection checkbox 331 is provided in front of each print job, and the user can select one or more print jobs to be printed. The print job list screen 330 includes the PIN transmission button 332. When the user presses the PIN transmission button 332, the print job list screen 330 transitions to the print execution screen 340 of FIG. 11 (e).

FIG. 11 (e) is an example of the print execution screen 340. The print execution screen 340 includes a message 341 "Hold apparatus close to MFP". Upon seeing the message 341, the user holds the information processing apparatus 10 close to a predetermined part (where the second near-field communication unit 31 is located) of the output apparatus 30. As a result, the information processing apparatus 10 sends the job identification information 24 of a print job(s) selected on the print job list screen 330 to the output apparatus 30. If the first near-field communication unit 14 cannot communicate with the output apparatus 30 within a certain period of time, the information processing apparatus 10 may display an error screen to that effect. When the information processing apparatus 10 sends the job identification information 24 of the print job to the output apparatus 30, the print execution screen 340 transitions to the menu screen 300.

When the batch printing button 303 is pressed on the menu screen 300, the menu screen 300 transitions to the print execution screen 340. When the batch printing button 303 is pressed, the information processing apparatus 10 transitions to the print execution screen 340 to send the information processing apparatus identification information 22 to the output apparatus 30. Therefore, in this case, the print job list screen 330 is not displayed, and the output apparatus 30 prints all the print jobs stored in the output system 50.

FIG. 12 is an example of screen transition in a case where the user manually inputs the job identification information 24 of a print job to the output apparatus 30. Below, differences between FIG. 12 and FIG. 11 are mainly described. FIG. 12 (a) is an example of the menu screen 300. The menu screen 300 of FIG. 12 (a) includes the file transmission button 301 and the PIN code confirmation button 304. The batch printing button 303 is not provided on the menu screen 300 of FIG. 12 (a). This is because it is difficult for the user to manually input the information processing apparatus identification information 22 to the output apparatus 30, or the information processing apparatus identification information 22 is confidential and should not be displayed on the display 418.

When the PIN code confirmation button 304 is pressed on the menu screen 300, the menu screen 300 transitions to the print job list screen 330 of FIG. 12 (d). When the PIN code confirmation button 304 is pressed, the information processing apparatus 10 sends the information processing apparatus identification information 22 to the output system 50 and obtains a list of print jobs.

FIG. 12 (d) is an example of the print job list screen 330. The print job list screen 330 of FIG. 12 (d) displays a list of print jobs similarly to the print job list screen 330 of FIG. 11 (d), but also displays the job identification information 24 along with the file name of each print job. Therefore, the user can confirm the job identification information 24 and input the job identification information 24 of a desired print job to the output apparatus 30.

Because FIG. 12 illustrates screen transition for a case where the job identification information 24 is manually input, the selection check box 331 is not displayed in front of each print job even on the print job list screen 330 of FIG. 12 (d). Also, in this case, the print execution screen 340 is not displayed. When the user presses an OK button 333 on the print job list screen 330, the print job list screen 330 returns to the menu screen 300.

FIG. 13 is an example of screen transition in a case where the information processing apparatus 10 transmits the information processing apparatus identification information 22 to the output apparatus 30 via near-field communication. Below, differences between FIG. 13 and FIG. 12 are mainly described. The menu screen 300 of FIG. 13 (a) includes the batch printing button 303.

When the batch printing button 303 is pressed on the menu screen 300, the menu screen 300 transitions to the print execution screen 340. When the batch printing button 303 is pressed, the information processing apparatus 10 sends the information processing apparatus identification information 22 to the output apparatus 30, and transitions to the print execution screen 340. Then, the output apparatus 30 prints all the print jobs stored in the output system 50.

In FIGs. 11 to 13, no screen related to print settings (paper type, color, density, double-sided printing, aggregation, the number of copies, etc.) is displayed. Default print settings stored beforehand in the output system 50 or the output apparatus 30 may be used for printing. Alternatively, when a print job is selected on the print job list screen 330, a print setting screen for the user may be displayed.

### <SUPPORTING BOTH OF MANUAL INPUT AND NEAR-FIELD COMMUNICATION>

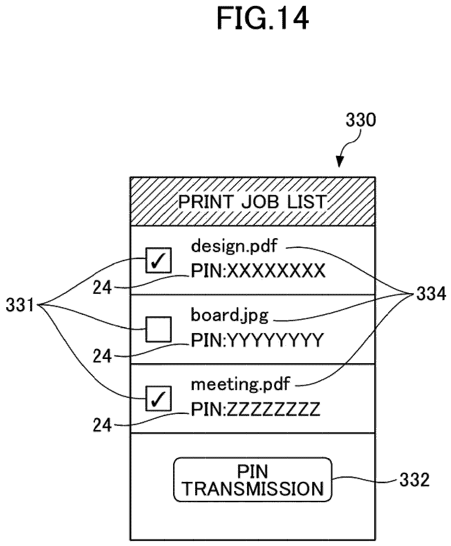

In FIG. 11 and FIG. 13, the job identification information 24 can be sent to the output apparatus 30 only via near-field communication; and in FIG. 12, the job identification information 24 can be input to the output apparatus 30 only manually. However, the user convenience can be improved by enabling the user to select transmission by near-field communication or manual input. For this purpose, the information processing apparatus 10 may be configured to display a print job list screen 330 as illustrated in FIG. 14.

FIG. 14 is an example of the print job list screen 330 that supports both of manual input of the job identification information 24 and the transmission of the job identification information 24 via near-field communication. The print job list screen 330 of FIG. 14 displays a file name 334, a check box 331, and job identification information 24 for each print job, and also includes a PIN transmission button 332.

With this configuration, the user who prefers manual input can confirm the job identification information 24 and manually input the job identification information 24 to the output apparatus 30, and the user who prefers transmission via near-field communication can select a desired print job(s) and press the PIN transmission button 332. This configuration makes it possible to use the same print job list screen 330 for manual input of the job identification information 24 and for transmission of the job identification information 24 via near-field communication.

### <SCREEN TRANSITION OF OUTPUT APPARATUS>

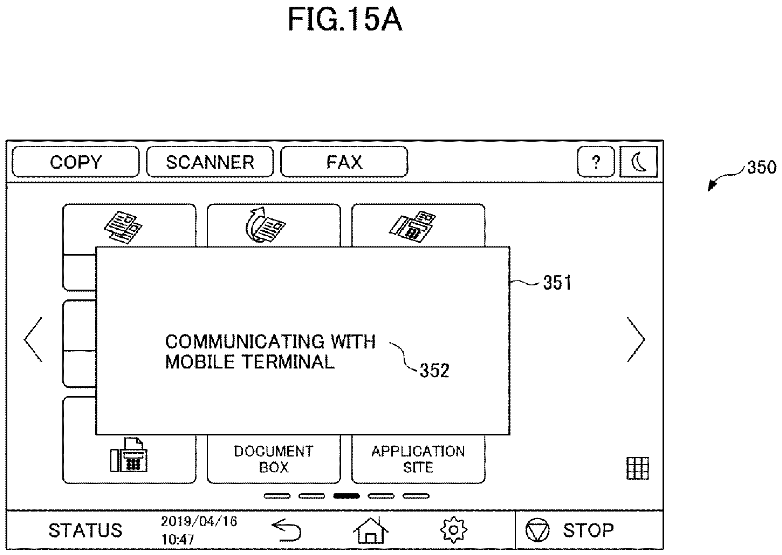

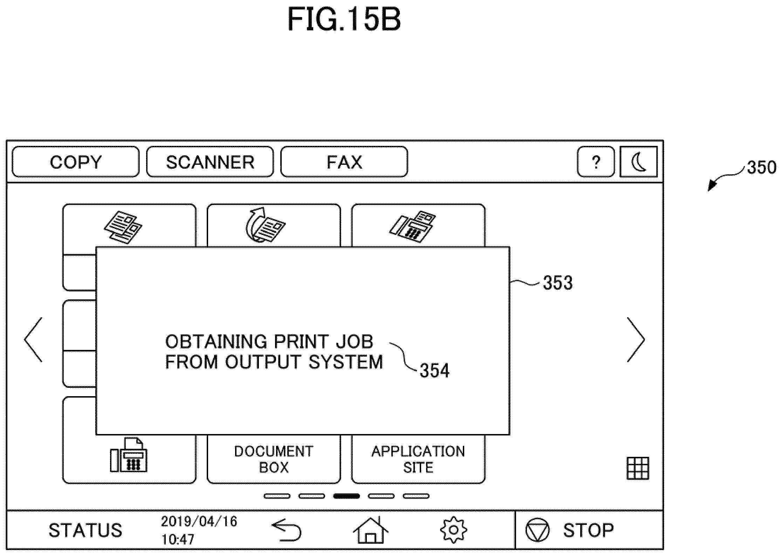

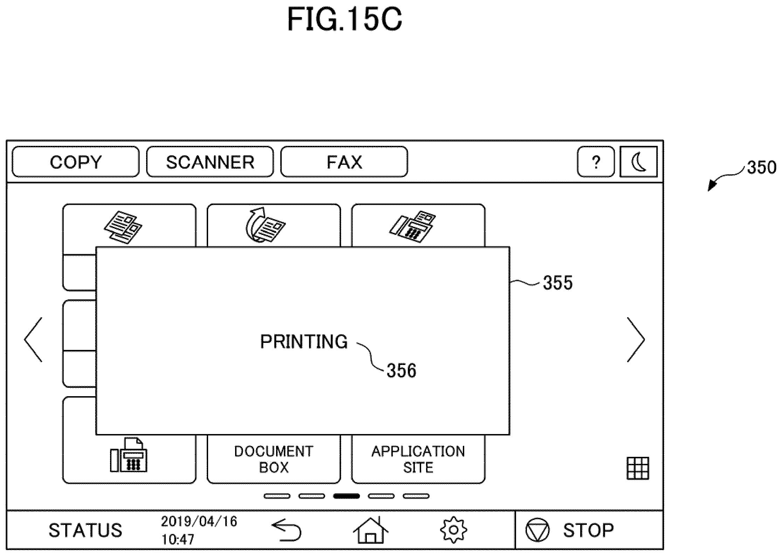

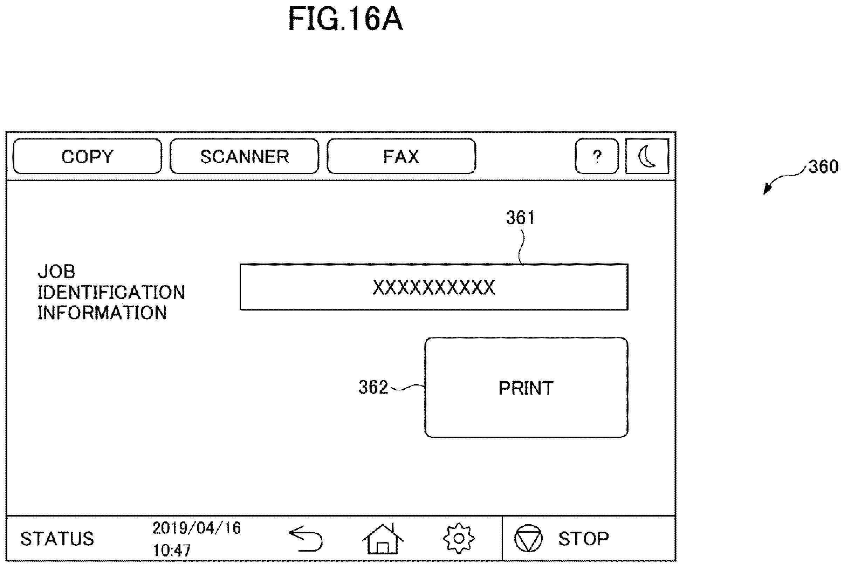

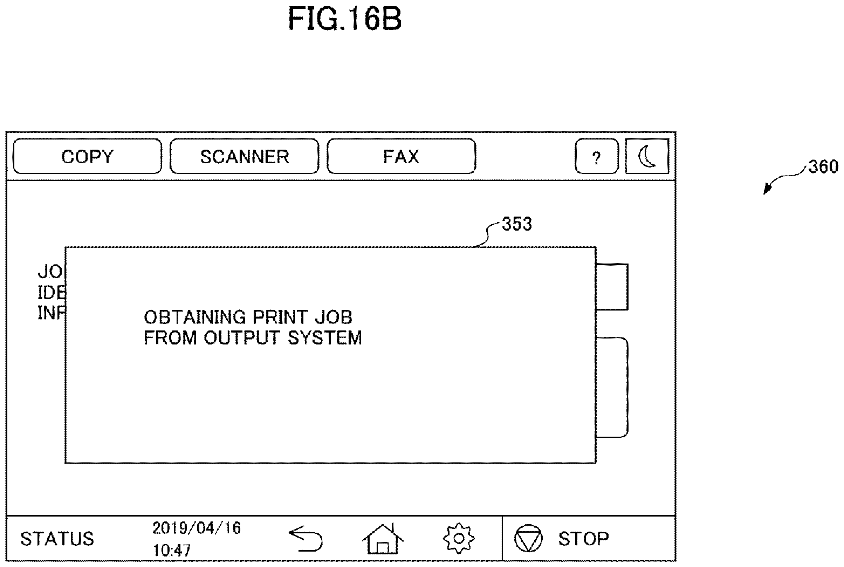

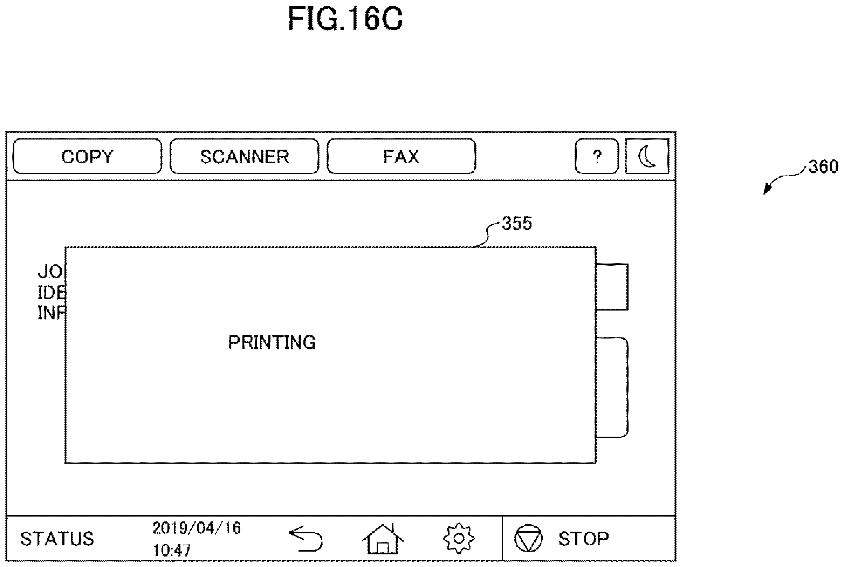

Transition of screens of the output apparatus 30 is described with reference to FIG. 15 and FIG. 16. FIGs. 15A through 15C illustrate an example of screen transition of the output apparatus 30 corresponding to the screen transition of the information processing apparatus 10 illustrate in FIG. 11. When the user confirms the print execution screen 340 of FIG. 11 (e) and holds the information processing apparatus 10 close to the output apparatus 30, the information processing apparatus 10 starts communicating with the output apparatus 30.

FIG. 15A illustrates a communication start screen 351 that is displayed by the output apparatus 30 when communication is started between the information processing apparatus 10 and the output apparatus 30. The screen of the output apparatus 30 before displaying the communication start screen 351 may be, for example, a home screen 350 for displaying a list of applications or a copy screen, and may vary depending on the design of the output apparatus 30. On the communication start screen 351, the output apparatus 30 displays a message 352 "Communicating with mobile terminal". While the communication start screen 351 is being displayed, the information processing apparatus 10 is sending the job identification information 24 or the information processing apparatus identification information 22 to the output apparatus 30. When the transmission of the job identification information 24 or the information processing apparatus identification information 22 is completed, an in-communication screen 353 of FIG. 15B is displayed.

FIG. 15B illustrates an example of the in-communication screen 353. On the in-communication screen 353, the output apparatus 30 displays a message 354 "Obtaining print job from output system". While the in-communication screen 353 is being displayed, the output apparatus 30 is sending the job identification information 24 or the information processing apparatus identification information 22 to the output system 50 and receiving a print job(s). When the reception of the print job(s) is completed, a printing screen 355 of FIG. 15C is displayed.

FIG. 15C illustrates an example of the printing screen 355. On the printing screen 355, the output apparatus 30 displays a message 356 "Printing". While the printing screen 355 is being displayed, the output apparatus 30 is printing the print job(s). In addition to the message 356, a file name(s) of the print job(s) being printed may also be displayed. When the execution (output) of the print job(s) is completed, the message 356 disappears and the screen returns to, for example, the home screen 350.

Instead of automatically transitioning from FIG. 15B to FIG. 15C, when the reception of the print job(s) is completed, the screen may transition from FIG. 15B to FIG. 15C in response to a print execution instruction from the user. In this case, the output apparatus 30 may display a list of print jobs and allow the user to select print jobs to be printed again.

FIGs. 16A through 16C are drawings illustrating an example of screen transition of the output apparatus 30 corresponding to the screen transition of the information processing apparatus 10 illustrated in FIG. 12. In FIG. 16, an input screen 360 for inputting the job identification information 24 is continuously displayed by the output apparatus 30. Alternatively, the input screen 360 may be displayed when the user starts the application on the output apparatus 30.

FIG. 16A illustrates the input screen 360 for inputting the job identification information 24. The input screen 360 includes a job identification information input field 361 and a print button 362. The user inputs the job identification information 24 confirmed on the print job list screen 330 of FIG. 12 (d) in the job identification information input field 361, and presses the print button 362. When the print button 362 is pressed, an in-communication screen 353 of FIG. 16B is displayed. FIG. 16B and FIG. 16C may be the same as FIG. 15B and FIG. 15C.

Screen transition of the output apparatus 30 corresponding to the screen transition of the information processing apparatus 10 illustrated in FIG. 13 may be the same as the screen transition illustrated in FIGs. 15A through 15C.

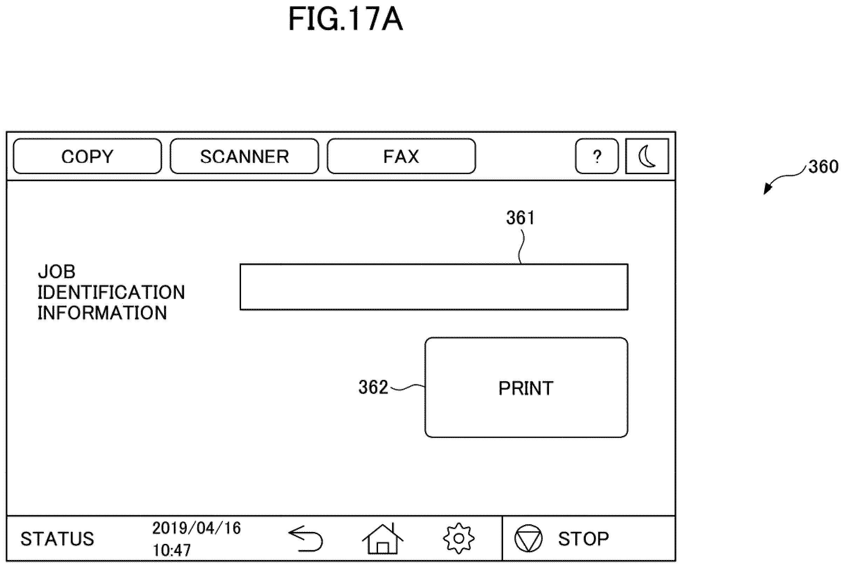

FIGs. 17A through 17C are drawings illustrating an example of screen transition of the output apparatus 30 corresponding to the screen transition of the information processing apparatus 10 illustrated in FIG. 14 where both of manual input and transmission via near-field communication are supported. FIG. 17A illustrates an input screen 360 for inputting the job identification information 24. The user can enter the job identification information 24 confirmed on the print job list screen 330 of FIG. 14 in a job identification information input field 361, or hold the information processing apparatus 10 close to the output apparatus 30.

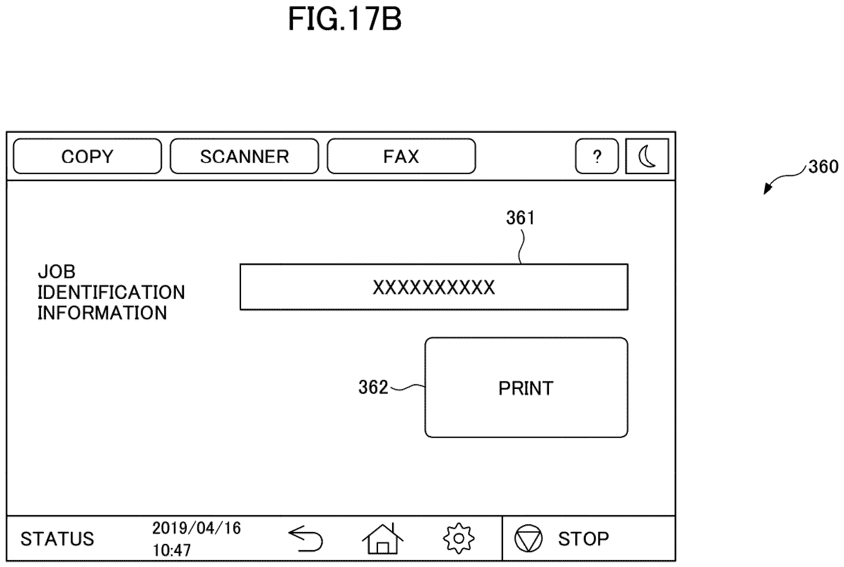

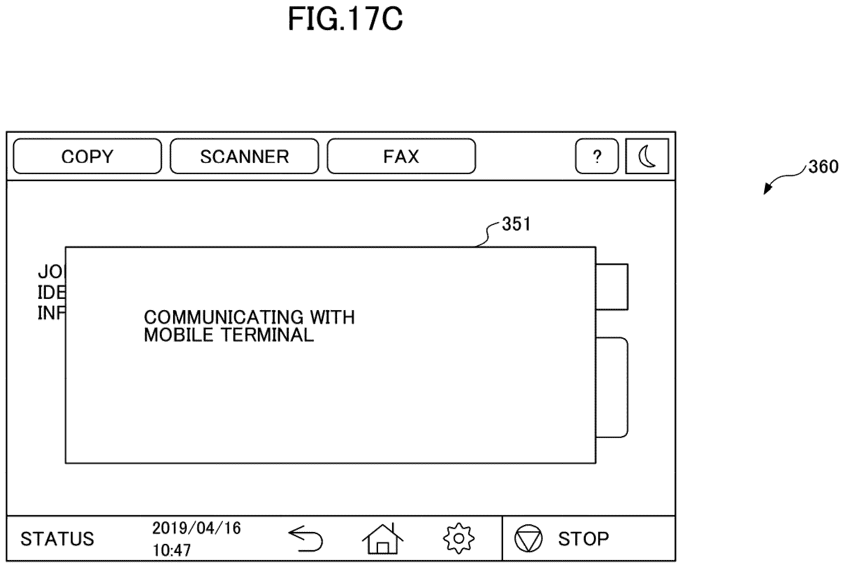

When the user inputs the job identification information 24 in the job identification information input field 361 as illustrated in FIG. 17B, the screen transitions as illustrated in FIGs. 16A through 16C; and when the information processing apparatus 10 is held close to the output apparatus 30, the communication start screen 351 illustrated in FIG. 17C is displayed, and the screen transitions as illustrated in FIGs. 15A through 15C.

### <DETERMINING WHETHER TO SEND JOB IDENTIFICATION INFORMATION OR INFORMATION PROCESSING APPARATUS IDENTIFICATION INFORMATION>

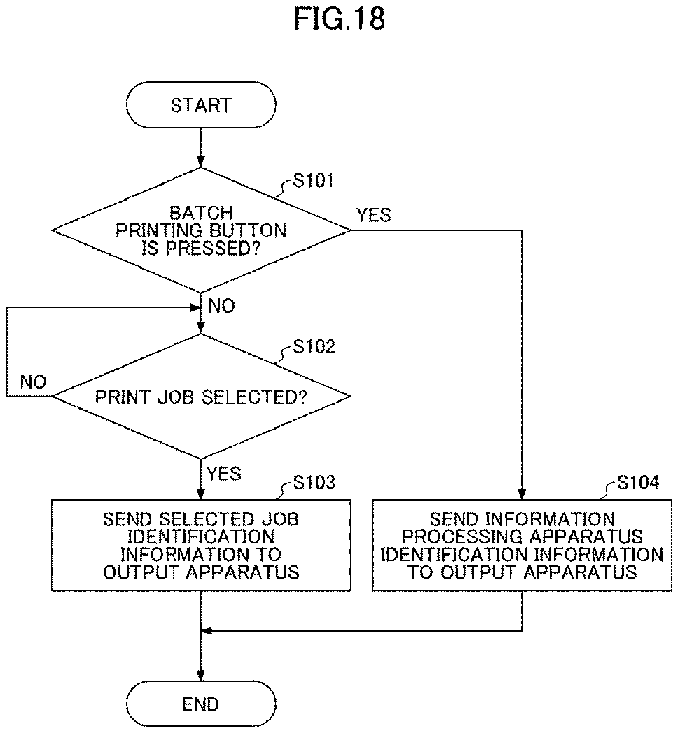

FIG. 18 is a flowchart illustrating an example of a process where whether job identification information or information processing apparatus identification information is transmitted by the information processing apparatus 10 via near-field communication is determined. The processing of FIG. 18 is performed, for example, when the information processing apparatus 10 displays the print execution screen 340 and sends job identification information or information processing apparatus identification information to the output apparatus 30.

When the batch printing button 303 is not pressed on the menu screen 300 (NO at step S101), the first near-field communication unit 14 of the information processing apparatus 10 determines whether a print job is selected on the print job list screen 330 (S102). When the print job list screen 330 is not displayed or when the print job list screen 330 is displayed but no print job is selected, it is determined that no print job is selected.

When the decision at step S102 is YES, the first near-field communication unit 14 sends the job identification information of the selected print job to the output apparatus 30 (S103).

When the batch printing button 303 is pressed on the menu screen 300 (YES at step S101), the first near-field communication unit 14 sends the information processing apparatus identification information to the output apparatus 30 (S104).

Thus, based on whether a print job is selected, the information processing apparatus 10 can determine whether to send job identification information or information processing apparatus identification information.

### <SUMMARY>

Thus, the information processing apparatus 10 of the present embodiment can obtain and display a list of print jobs stored by the user by using the information processing apparatus identification information 22. Also, because the list of print jobs includes the job identification information 24 for each print job, the user can separately print each print job by sending or inputting the job identification information 24 to the output apparatus 30. Further, the user can print all print jobs stored in the output system 50 in a batch by sending the information processing apparatus identification information 22 to the output apparatus 30. Also, when sending job identification information or information processing apparatus identification information from the information processing apparatus 10 to the output apparatus 30 via near-field communication as in step S7 of FIG. 8 or step S7-2 of FIG. 9, the user only needs to hold the information processing apparatus 10 close to the output apparatus 30. Also, the user can select a print job(s) to be printed on the information processing apparatus 10 being carried by the user. Accordingly, the user can print a desired print job simply by holding the information processing apparatus 10 carried by the user close to the output apparatus 30 without touching the output apparatus 30. That is, the user does not need to touch the output apparatus 30 that is a shared terminal supposed to be used by multiple users. This is advantageous in terms of hygiene. Also, the user does not need to switch networks such as wireless LANs to which the information processing apparatus 10 is connected. Therefore, the user can print desired print jobs while ensuring security.

### [SECOND EMBODIMENT]

In the first embodiment, the information processing apparatus identification information 22 is used as related job specification information. In a second embodiment, an information processing system 1 where user authentication information is used as related job specification information is described.

User authentication information is issued by a certificate authority as information for authenticating a user to allow the user to use a web service. User authentication information is generally called a token or an access token, but may also be called by another name. That is, a user with user authentication information is certified as a user by the certificate authority.

### <OUTLINE OF INFORMATION PROCESSING SYSTEM>

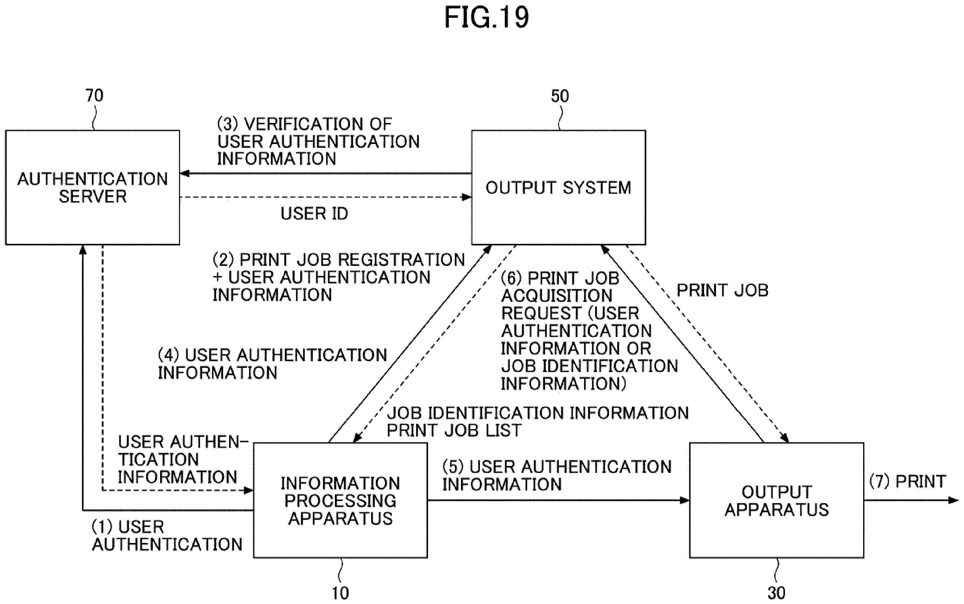

Operations of the information processing system 1 of the second embodiment are described with reference to FIG. 19. FIG. 19 is drawing illustrating an example of operations of the information processing system 1.
(1) To obtain user authentication information used in the information processing system 1, the user operates the information processing apparatus 10 to communicate with an authentication server 70 and transmit, for example, a user ID (for example, an email address) and a password to the authentication server 70 to request user authentication. As a result, the information processing apparatus 10 obtains user authentication information.
(2) When the user wants to print a document, the user operates the information processing apparatus 10 to send a print job for printing the document to the output system 50. In this case, the information processing apparatus 10 sends the print job and the user authentication information to the output system 50.
(3) The output system 50 requests the authentication server 70 to verify the user authentication information to determine whether the user authentication information has been authenticated. The authentication server 70 determines whether the user authentication information to be verified is the same as the issued user authentication information. When they are the same, the authentication server 70 determines that the verification is successful. Because the user ID is registered in the authentication server 70 in association with the user authentication information, the authentication server 70 sends the user ID to the output system 50 when the verification is successful.
   When the verification is successful, the output system 50 assigns job identification information 24 to the received print job and sends the job identification information 24 to the information processing apparatus 10. Also, the output system 50 registers the job identification information 24 and the user ID in association with the print job.
(4) After the registration, as explained in the first embodiment, the information processing apparatus 10, in response to a user operation or automatically, requests the output system 50 to send a list of print jobs associated with the user ID (because related job specification information is sent in the present embodiment, the user authentication information is sent instead of the user ID). The output system 50 verifies the user authentication information and obtains the user ID as in (3), and sends a list of print jobs associated with the user ID to the information processing apparatus 10. Thus, also in the present embodiment, the information processing apparatus 10 can obtain and display a list of print jobs stored by the user by using the user authentication information.
(5) When the user moves to the output apparatus 30, the information processing apparatus 10 sends the user authentication information to the output apparatus 30 via near-field communication in response to a user operation. Although the user authentication information may be manually entered, the user authentication information is preferably transmitted because of its number of digits.
(6) The output apparatus 30 requests the output system 50 to send a list of print jobs corresponding to the user authentication information. The output system 50 verifies the user authentication information and obtains the user ID as in (3), and sends a list of print jobs associated with the user ID to the output apparatus 30.
(7) The output apparatus 30 prints the print jobs received from the output system 50.

Thus, in the present embodiment, user authentication information can be used as related job specification information to obtain and display a list of print jobs stored by the user. Because the information processing apparatus identification information 22 is fixed, the information processing apparatus identification information 22 is vulnerable to the risk of leakage and cannot be easily changed. Also, a user ID such as an email address is public information and is therefore not suitable for related job specification information. On the other hand, because user authentication information is changed by the authentication server 70 as time passes, security can be relatively easily maintained even if user authentication information is leaked.

### <SYSTEM CONFIGURATION>

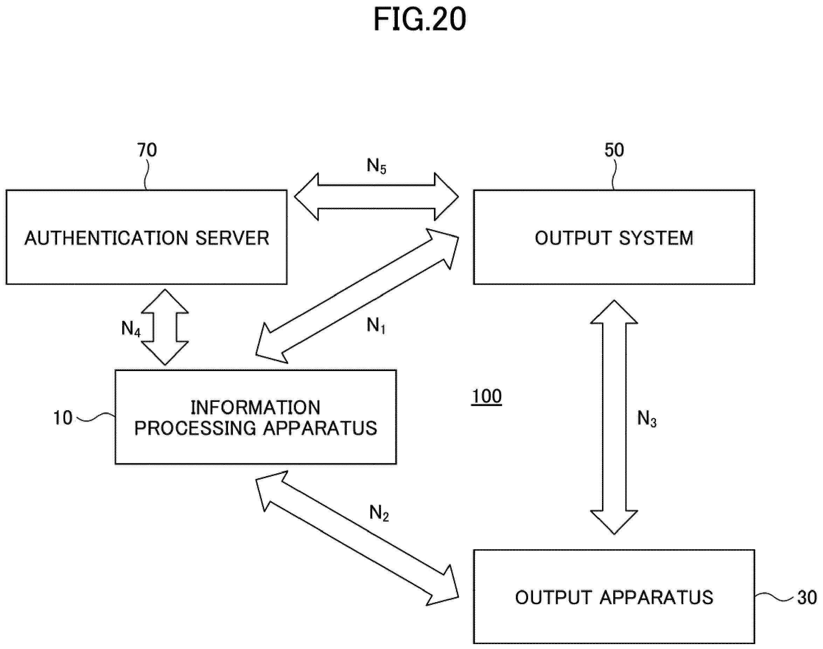

FIG. 20 is a drawing illustrating an example of a configuration of the information processing system 1 of the present embodiment. The information processing system 1 includes the information processing apparatus 10, the output system 50, the authentication server 70, and the output apparatus 30. In FIG. 20, components with the same reference numbers as those in FIG. 3 have substantially the same functions as the corresponding components in FIG. 3. Therefore, differences between the configurations of FIG. 20 and FIG. 3 are mainly described here.

The information processing apparatus 10 and the authentication server 70 communicate with each other via a network N4. The network N4 may be similar to the network N1. The output system 50 and the authentication server 70 communicate with each other via a network N5. The network N5 may be similar to the network N3.

The authentication server 70 is called an authorization server in an authentication method such as OAUTH, and issues an access token. In the present embodiment, the application of the information processing apparatus 10 corresponds to a client application in OAUTH, and the output system 50 corresponds to a resource server in OAUTH. The output system 50 queries the authentication server 70 to verify the access token. When the access token is successfully verified, the output system 50 provides its own resources (such as print jobs).

### <FUNCTIONS OF INFORMATION PROCESSING SYSTEM>

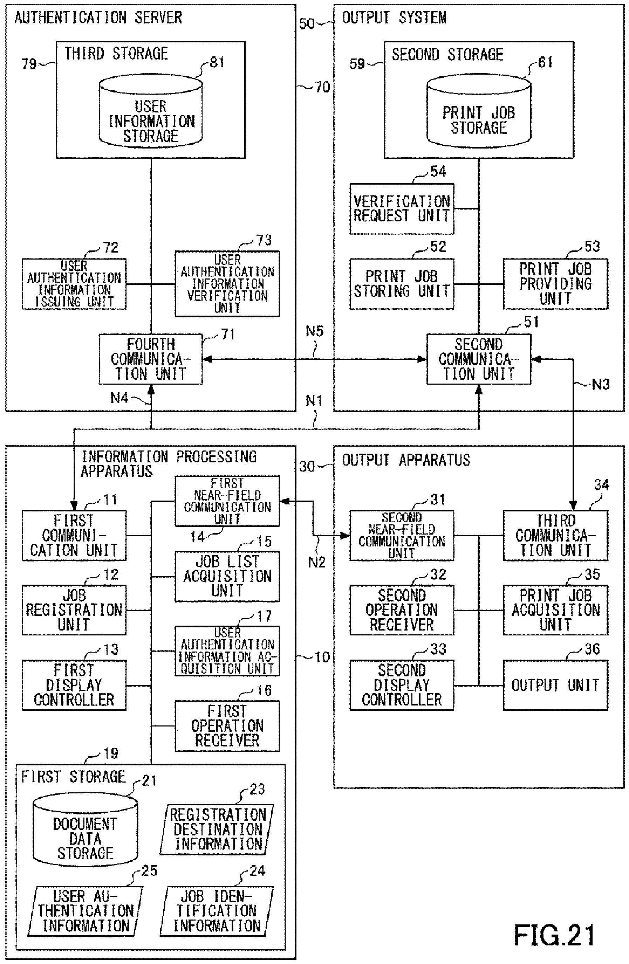

FIG. 21 is a block diagram illustrating functional configurations of the information processing apparatus 10, the output system 50, the output apparatus 30, and the authentication server 70 of the information processing system 1. In FIG. 21, components with the same reference numbers as those in FIG. 7 have substantially the same functions as the corresponding components in FIG. 7. Therefore, differences between the configurations of FIG. 21 and FIG. 7 are mainly described here.

### <<INFORMATION PROCESSING APPARATUS>>

The information processing apparatus 10 of the present embodiment additionally includes a user authentication information acquisition unit 17. The user authentication information acquisition unit 17 sends a user ID and a password to the authentication server 70 to request user authentication information. The user authentication information acquisition unit 17 stores obtained user authentication information 25 in the first storage 19.

### <<OUTPUT SYSTEM>>

The output system 50 of the present embodiment additionally includes a verification request unit 54. The verification request unit 54 requests the authentication server 70 to verify user authentication information sent from the information processing apparatus 10 or the output apparatus 30, and obtains a user ID from the authentication server 70.

In the second embodiment, print job information stored in the print job storage 61 is different from that in the first embodiment. This is described with reference to Table 5.

**[TABLE 5]**

| File Name | Job Identification Information | User ID | File URL |
|---|---|---|---|
| xxxx.pdf | 1234 | usera@sample.co m | https://zzz/file s/xxxx.pdf |
| yyyy.pdf | 3456 | usera@sample.co m | https://zzz/file s/yyyy.pdf |
| zzzz.pdf | 5678 | userb@sample.co m | https://zzz/file s/zzzz.pdf |

Table 5 indicates an example of print job information stored in print job storage 61. The print job information includes a file name, the job identification information 24, a user ID, and a file URL. Thus, the information processing apparatus identification information 22 is replaced with the user ID.

User ID ... User identification information that identifies a user. The user ID is associated with the user authentication information in the authentication server 70 and is obtained from the authentication server 70. In Table 5, an email address is used as the user ID. However, any type of information that identifies the user may be used.

### <<AUTHENTICATION SERVER>>

The authentication server 70 includes a fourth communication unit 71, a user authentication information issuing unit 72, and a user authentication information verification unit 73. Each of these functional units of the authentication server 70 may be implemented by causing one or more of the components illustrated in FIG. 5 to operate according to an instruction from the CPU 501 executing a program loaded from the HD 504 to the RAM 503.

The fourth communication unit 71 sends and receives various types of data to and from the information processing apparatus 10 and the output system 50. In the present embodiment, the fourth communication unit 71 mainly receives a user authentication information request from the information processing apparatus 10, transmits user authentication information, and transmits a user ID when receiving a verification request from the output system 50. Because the authentication server 70 is present in, for example, a data center, the fourth communication unit 71 is connected to, for example, a LAN. Accordingly, the authentication server 70 is not directly connected to a public line and communicates with the information processing apparatus 10 via a gateway of a telephone company.

The user authentication information issuing unit 72 issues user authentication information based on the user ID and the password received from the information processing apparatus 10 via the fourth communication unit 71, and registers the user ID, the password, and the user authentication information in a user information storage 81.

In response to a user authentication information verification request received from the output system 50 by the fourth communication unit 71, the user authentication information verification unit 73 compares user authentication information received from the output system 50 with the user authentication information registered in the user information storage 81. When they match each other, the user authentication information verification unit 73 sends a user ID to the output system 50.

Also, the authentication server 70 includes a third storage 79 comprised of one or more of the HD 504, the RAM 503, and the ROM 502 illustrated in FIG. 5. The user information storage 81 is formed in the third storage 79. Table 6 indicates an example of information stored in the user information storage 81.

**[TABLE 6]**

| User ID | Password | User authentication information |
|---|---|---|
| usera@sample.com | **** | F4176a6f61b06aeb320cca7938f788fb fb42add8 (expiration date: 20XX/10/15) |

Table 6 indicates an example of user information stored in the user information storage 81. The user information includes a user ID, a password, and user authentication information.

User ID ... User identification information for uniquely identifying or registering a user.

Password ... Secret information for authenticating a user.

User authentication information ... Related job specification information of the present embodiment such as an access token. The expiration date is set for the user authentication information.

### <PROCESSES>

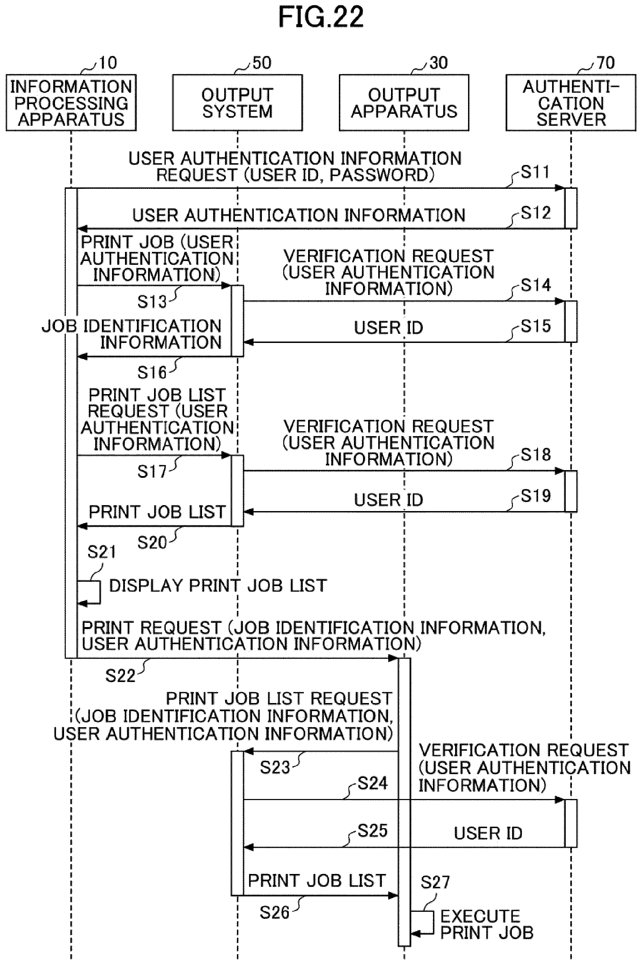

FIG. 22 is a sequence chart illustrating an example of a process where the information processing apparatus 10 registers print jobs in the output system 50 and sends user authentication information to the output apparatus 30, and the output apparatus 30 executes the print jobs.

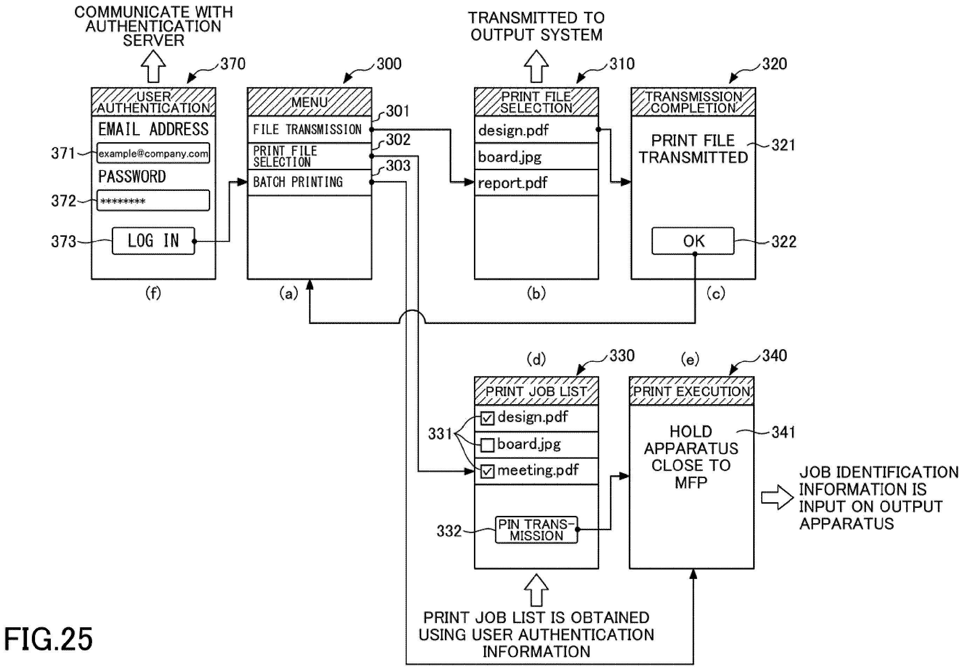

S11: To register a print job in the output system 50, the user operates the information processing apparatus 10 and starts an application. The user inputs a user ID and a password on an authentication screen 370 (see FIG. 25(f)). As necessary, the user authentication information acquisition unit 17 requests the authentication server 70 via the first communication unit 11 to send user authentication information. Here, the user authentication information acquisition unit 17 needs to request user authentication information when no user authentication information is stored in the first storage 19 or when the expiration date of the current user authentication information has passed. The user authentication information acquisition unit 17 sends a user authentication information acquisition request to the authentication server 70 together with the user ID and the password input by the user.

S12: The fourth communication unit 71 of the authentication server 70 receives the user authentication information acquisition request, and the user authentication information issuing unit 72 verifies the user ID and the password stored in the user information storage 81 and issues user authentication information. When issuing user authentication information for the first time, the authentication server 70 sends an email message including a URL. When the user accesses the URL, the authentication server 70 confirms the identity of the user and issues the user authentication information.

The first communication unit 11 of the information processing apparatus 10 receives the user authentication information, and the user authentication information acquisition unit 17 stores user authentication information 25 in the first storage 19. As a result, the menu screen 300 of FIG. 25 (a) is displayed. When it is not necessary to obtain the user authentication information 25, the menu screen 300 may be displayed immediately after the application is started.

S13: The user presses the file transmission button 301 on the menu screen 300. As a result, the menu screen 300 transitions to the print file selection screen 310 (FIG. 25 (b)). The print file selection screen 310 displays document data files stored in the document data storage 21. The user operates the print file selection screen 310 to select a document data file to be sent to the output system 50. The first operation receiver 16 receives the selection of the document data file. When the user performs an operation to send a print job (in FIG. 25 (b), the selection of the document data file corresponds to this operation, but a send button may be pressed additionally), the first communication unit 11 connects to the network N1 by using the registration destination information 23, and the job registration unit 12 sends the print job and the user authentication information to the output system 50. As a result, the print file selection screen 310 transitions to the transmission completion screen 320 (FIG. 25 (c)).

S14: The second communication unit 51 of the output system 50 receives the print job and the user authentication information, and the verification request unit 54 sends a verification request to the authentication server 70 together with the user authentication information.

S15: The fourth communication unit 71 of the authentication server 70 receives the user authentication information and the verification request, and the user authentication information verification unit 73 verifies the user authentication information by determining whether the user authentication information is registered in the user information storage 81. In the present embodiment, it is assumed that the verification is successful. When the verification is successful, the user authentication information verification unit 73 obtains the user ID associated with the user authentication information from the user information storage 81 and sends the user ID to the output system 50 via the fourth communication unit 71.

S16: When the verification is successful (when the user ID is obtained), the print job storing unit 52 of the output system 50 generates the job identification information 24 and stores print job information in the print job storage 61. The second communication unit 51 of the output system 50 sends the job identification information 24 to the information processing apparatus 10.

The first communication unit 11 of the information processing apparatus 10 receives the job identification information 24 as a response to the transmission of the print job, and the job registration unit 12 stores the job identification information 24 in the first storage 19. Through the above process, the print job is registered in the output system 50.

S17: Next, a case where the user executes a print job on the output apparatus 30 is described. The three types of operations (i) through (iii) that the user can perform are the same as those described in the first embodiment.

When the first operation receiver 16 of the information processing apparatus 10 receives a user operation to obtain a list of print jobs (pressing the print file selection button 302 on the menu screen 300 of FIG. 25 (a)), the job list acquisition unit 15 sends a print job list acquisition request with the user authentication information to the output system 50 via the first communication unit 11.

S18: The second communication unit 51 of the output system 50 receives the user authentication information and the print job list acquisition request, and the verification request unit 54 sends a verification request and the user authentication information to the authentication server 70.

S19: The process performed at the authentication server 70 is the same as step S15.

S20: When the verification is successful (when the user ID is obtained), the print job providing unit 53 of the output system 50 obtains a list of all print jobs associated with the user ID from the print job storage 61 and sends the list of print jobs to the information processing apparatus 10 via the second communication unit 51. The job list acquisition unit 15 of the information processing apparatus 10 receives the list of print jobs via the first communication unit 11.

S21: The first display controller 13 displays a list of print jobs on the display 418 (FIG. 25 (d)). The list of print jobs includes the job identification information 24. However, the job identification information 24 is not necessarily displayed, or may be displayed in response to a user operation.

Also, instead of sending the list of print jobs in response to a user operation, the output system 50 may automatically send the list of print jobs when the print jobs are registered.

S22: The user can print a selected print job on the output apparatus 30. Also, although it is not clear from the transition of screens, the user may be able to print all of the print jobs in a batch even when the list of print jobs is displayed.

Here, a case where the user selects and prints each print job is described. When the user selects a print job to be printed and performs an operation to start printing (presses the PIN transmission button 332 in FIG. 25 (d)), the first operation receiver 16 receives the operation, and the first near-field communication unit 14 sends a print request to the output apparatus 30 together with the job identification information 24 of the selected print job and the user authentication information. As described above, the user is close enough to the output apparatus 30 so that the information processing apparatus 10 and the output apparatus 30 can communicate with each other via near-field communication. If the output apparatus 30 is being used by another user, the user cannot come close to the output apparatus 30. Therefore, the communication distance (radio field strength) is designed such that near-field communication is not possible when the user is not close to the output apparatus 30.

When sending the job identification information to the output apparatus 30, the user authentication information is not essential (when the user is not authenticated). The user may also manually input the job identification information 24 to the output apparatus 30. When the PIN transmission button 332 is pressed, the print job list screen 330 transitions to the print execution screen 340 (FIG. 25 (e)).

S23: The second near-field communication unit 31 of the output apparatus 30 receives the print request together with the job identification information 24 and the user authentication information. In response to the print request, the print job acquisition unit 35 sends a print job list request with the job identification information 24 and the user authentication information via the third communication unit 34 to the output system 50.

S24: The second communication unit 51 of the output system 50 receives the print job list request along with the job identification information 24 and the user authentication information, and the verification request unit 54 sends the user authentication information to the authentication server 70 to request verification. When the user authentication information is not to be verified, steps S24 and S25 may be omitted.

S25: The process at the authentication server 70 is the same as step S15.

S26: When the verification is successful (when the user ID is obtained), the print job providing unit 53 of the output system 50 obtains all print jobs associated with the job identification information 24 from the print job storage 61. The second communication unit 51 sends a list of print jobs to the output apparatus 30. The list of print jobs does not necessarily include document data. Only the list of print jobs may be transmitted first, and document data may be transmitted each time the output apparatus 30 executes a print job.

S27: The third communication unit 34 of the output apparatus 30 receives the list of print jobs, and the output unit 36 sequentially executes all of the print jobs to output printed matter.

Thus, in the present embodiment, the information processing apparatus 10 obtains a list of print jobs stored in the output system 50 by using the user authentication information as related job specification information and displays the obtained list of print jobs so that the user can confirm the print jobs stored in the output system 50.

### «BATCH PRINTING»

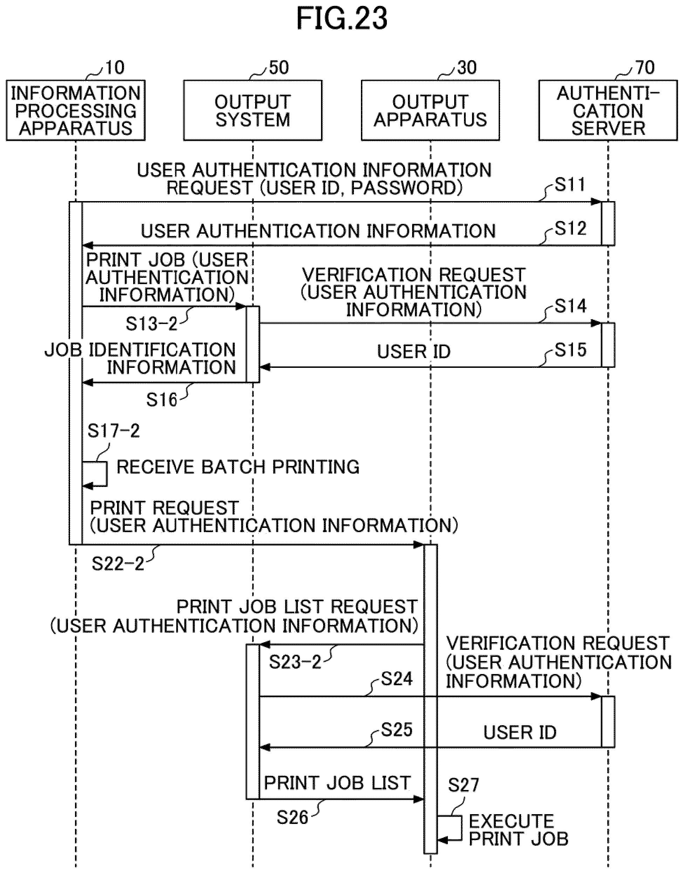

Next, a process where the information processing apparatus 10 prints multiple print jobs in a batch is described with reference to FIG. 23. FIG. 23 is a sequence chart illustrating an example of a process where the information processing apparatus 10 registers print jobs in the output system 50, sends user authentication information to the output apparatus 30, and the output apparatus 30 executes the print jobs. Below, differences between FIG. 23 and FIG. 22 are mainly described.

Steps S11 through S16 are substantially the same as those in FIG. 8.
S17-2: The first operation receiver 16 of the information processing apparatus 10 receives a user operation to print print jobs in a list of print jobs in a batch (pressing the batch printing button 303 on the menu screen 300 of FIG. 25 (a)). In this case, the list of print jobs is not obtained nor displayed. However, the list of print jobs may be displayed similarly to the process of FIG. 22.

S22-2: When the user performs an operation to print all print jobs in a batch, the first operation receiver 16 receives the operation, and the first near-field communication unit 14 sends a print request to the output apparatus 30 together with the user authentication information. The print request at step S22-2 is a batch printing request.

S23-2: The second near-field communication unit 31 of the output apparatus 30 receives the print request together with the user authentication information. In response to the print request, the print job acquisition unit 35 sends a print job list request with the user authentication information via the third communication unit 34 to the output system 50.

S24, S25: When the second communication unit 51 of the output system 50 receives the print job list request and the user authentication information, the verification request unit 54 requests the authentication server 70 to perform verification.

S26: When the verification is successful (when the user ID is obtained), the print job providing unit 53 obtains all print jobs associated with the user ID from the print job storage 61. The second communication unit 51 sends a list of print jobs to the output apparatus 30.

S27: The third communication unit 34 of the output apparatus 30 receives the list of print jobs, and the output unit 36 sequentially executes all of the print jobs to output printed matter.

Thus, in the present embodiment, the information processing apparatus 10 can print print jobs stored in the output system 50 in a batch by using the user authentication information as related job specification information.

### «OTHER EXAMPLES OF SCREEN TRANSITION»

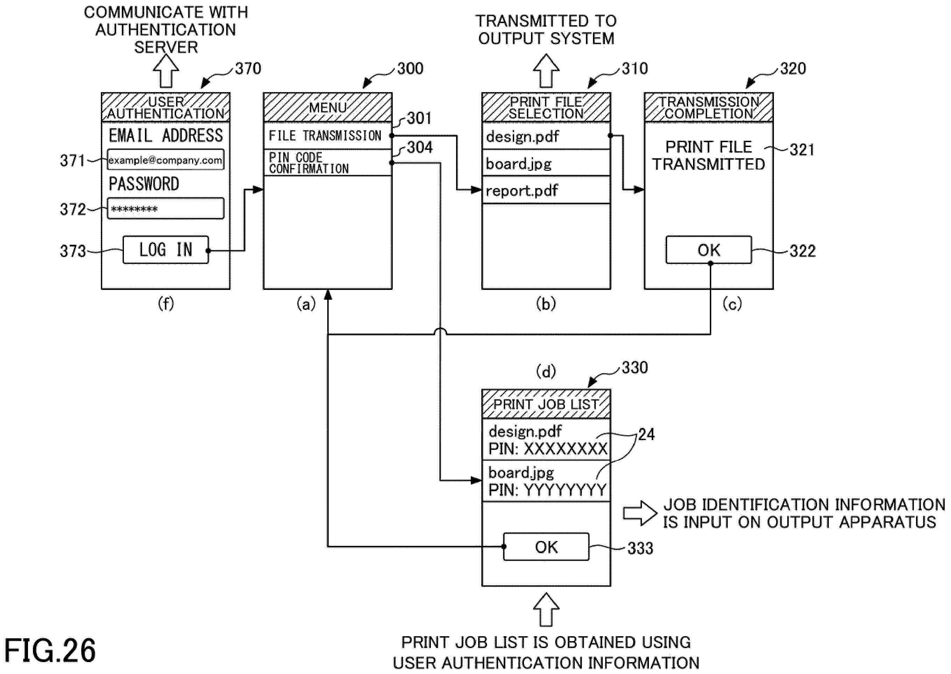

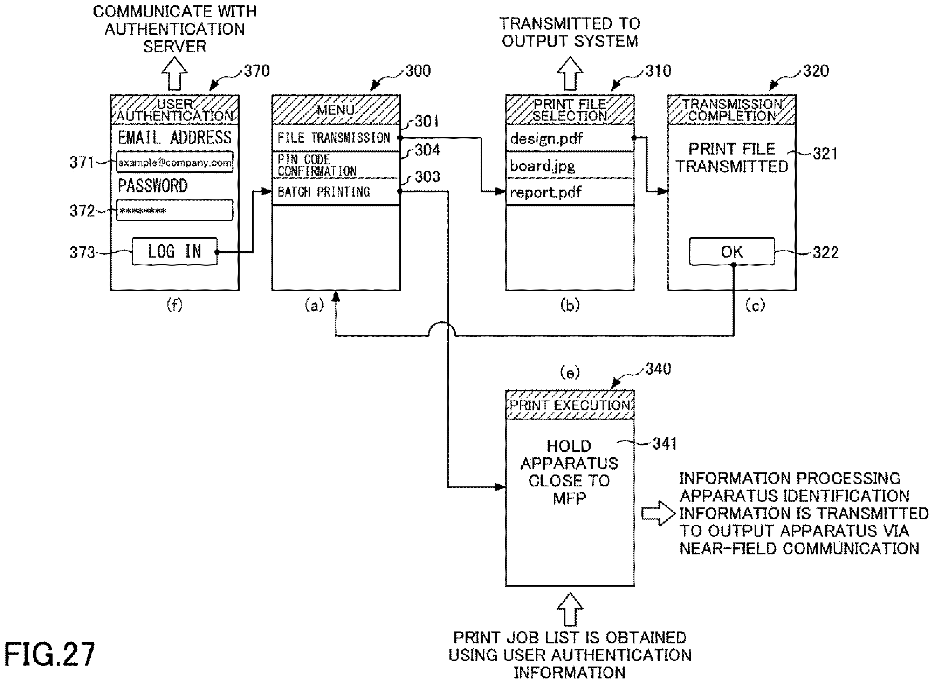

The processes of FIG. 22 and FIG. 23 are described based mainly on the screen transition illustrated in FIG. 25. However, the application may also adopt screen transitions illustrated in FIG. 26 and FIG. 27. The sequence charts of FIG. 22 and FIG. 23 may also be applied to the screen transitions illustrated in FIG. 26 and FIG. 27. Here, a supplementary explanation of a manual input method illustrated in FIG. 26 is provided.

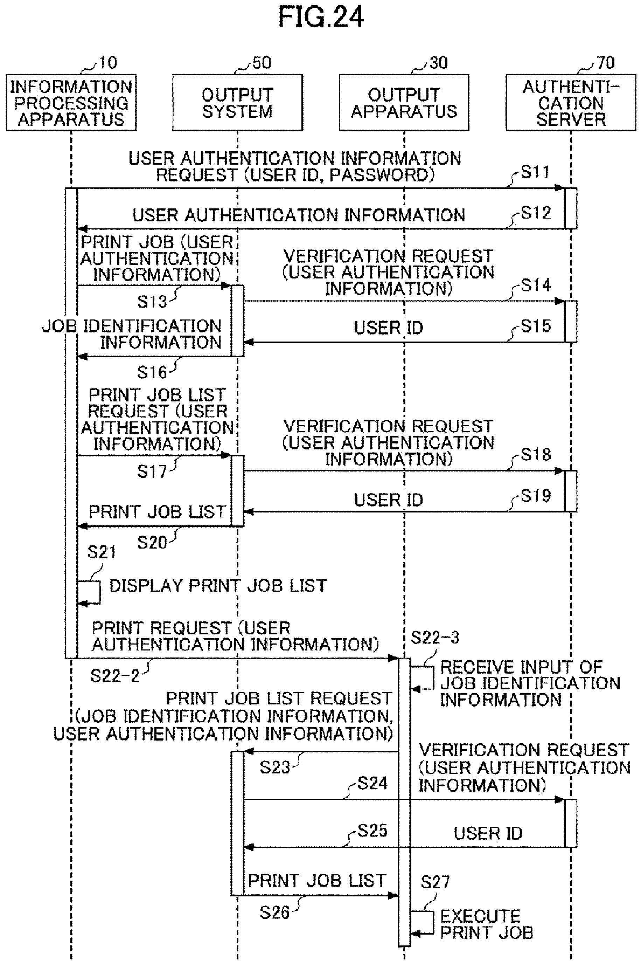

FIG. 24 illustrates a process performed when the PIN code confirmation button 304 is pressed on the menu screen 300 of FIG. 26 (a). FIG. 24 is a sequence chart illustrating an example of a process where the information processing apparatus 10 registers a print job in the output system 50, the user manually inputs job identification information to the output apparatus 30, and the output apparatus 30 executes the print job. Below, differences between FIG. 24 and FIG. 22 are mainly described.

At step S22-2 of FIG. 24, only user authentication information is transmitted.
S22-3: The user confirms job identification information on the print job list screen 330 of FIG. 26 (d) and inputs the job identification information to the output apparatus 30. The second operation receiver 32 of the output apparatus 30 receives the input job identification information. Subsequent steps are substantially the same as those in FIG. 22.

Thus, in the present embodiment, because the user authentication information is sent from the information processing apparatus 10 to the output apparatus 30, a print job manually entered by the user can be printed after user authentication. Also, in the process of FIG. 24, the information processing apparatus 10 can send job identification information together with user authentication information, and it is useful to manually input both of job identification information and user authentication information instead of manually inputting only the job identification information by the user. Alternatively, similarly to the first embodiment, when printing print jobs separately, the output apparatus 30 may omit user authentication. In this case, it is not necessary to send user authentication information at step S22-2.

When the PIN code confirmation button 304 is pressed on the menu screen 300 of FIG. 27 (a), a process that is substantially the same as the process of FIG. 22 is performed; and when the batch printing button 303 is pressed on the menu screen 300 of FIG. 27 (a), a process that is substantially the same as the process of FIG. 23 is performed.

### «EXAMPLES OF SCREENS»

FIGs. 25 through 27 are drawings illustrating the transitions of screens of the application displayed on the display 418 by the information processing apparatus 10 in the process of FIG. 22. FIG. 25 illustrates examples of screens displayed when the information processing apparatus 10 sends the job identification information 24 of each print job or the user authentication information to the output apparatus 30, FIG. 26 illustrates examples of screens displayed when the user manually inputs the job identification information 24 of a print job to the output apparatus 30, and FIG. 27 illustrates examples of screens displayed when the information processing apparatus 10 sends the user authentication information to the output apparatus 30. Differences between FIGs. 25 through 27 and FIGs. 11 through 13 are mainly described below.

In the present embodiment, the information processing apparatus 10 obtains user authentication information from the authentication server 70 and stores the obtained user authentication information. Accordingly, an authentication screen 370 is displayed in each of FIGs. 25 through 27. The authentication screen 370 may be displayed each time the application is started, may be displayed when the expiration date of the user authentication information has passed, or may be displayed periodically.

The authentication screen 370 includes a user ID input field 371, a password input field 372, and a login button 373. The user enters a user ID in the user ID input field 371, enters a password in the password input field 372, and presses the login button 373. When the authentication server 70 determines that the user has been successfully authenticated, the information processing apparatus 10 obtains user authentication information, and the authentication screen 370 transitions to the menu screen 300. The screen transition after the menu screen 300 is displayed is substantially the same as that in FIGs. 11 through 13. The screen transition of the output apparatus 30 may also be the same as that of FIGs. 15A through 17C.

### <SUMMARY>

As described above, the information processing system 1 of the present embodiment uses the user authentication information as related job specification information instead of the information processing apparatus identification information 22. Accordingly, the present embodiment provides the effects of the first embodiment and also makes it easier to maintain the security of document data.
Also, to send job identification information, user authentication information, or a print request from the information processing apparatus 10 to the output apparatus 30 via near-field communication as in step S22 of FIG. 22 or step S22-2 of FIG. 23, the user only needs to hold the information processing apparatus 10 close to the output apparatus 30. Also, the user can select a print job(s) to be printed on the information processing apparatus 10 being carried by the user. Accordingly, the user can print a desired print job without touching the output apparatus 30. That is, the user does not need to touch the output apparatus 30 that is a shared terminal supposed to be used by multiple users. This is advantageous in terms of hygiene. Also, the user does not need to switch networks such as wireless LANs to which the information processing apparatus 10 is connected. Therefore, the user can print desired print jobs while ensuring security.

### <EXAMPLES OF OTHER APPLICATIONS>

A program, an information processing system, an information processing method, and an information processing apparatus according to embodiments of the present invention are described above. However, the present invention is not limited to the specifically disclosed embodiments, and variations and modifications may be made without departing from the scope of the present invention.

For example, in addition to the information processing apparatus 10, the output apparatus 30 can also display a list of print jobs. The user can select a print job to be printed on the output apparatus 30. In this case, the user can set print settings on the output apparatus 30.

Also, although it is assumed in the present embodiment that the output apparatus 30 is an image forming apparatus, the output apparatus 30 is not limited to an image forming apparatus. Other examples of the output apparatus 30 include output devices such as a projector (PJ), an interactive white board (IWB: a white board having functions of an electronic black board capable of communications), and a digital signage, a head-up display (HUD), an industrial machine, an imaging device, a sound collector, a medical device, a network home appliance, an automobile (Connected Car), a notebook PC, a mobile phone, a smartphone, a tablet terminal, a game machine, a personal digital assistant (PDA), a digital camera, a wearable PC, and a desktop PC.

The configuration of the information processing system 1 illustrated in, for example, FIG. 7 is divided into functional units to facilitate the understanding of processes performed by the information processing apparatus 10, the output system 50, and the output apparatus 30. However, the present invention is not limited by a manner in which each apparatus or system is divided into functional units and by the names of the functional units. The process of each of the information processing apparatus 10, the output system 50, and the output apparatus 30 may be further divided into process units according to the contents of the process. Also, the information processing system 1 may be divided into process units such that each process unit includes a greater number of processes.

Also, the apparatuses described above merely indicate one of multiple computing environments for implementing the embodiments described in the present application. In an embodiment, the output system 50 may include multiple computing devices such as server clusters. The multiple computing devices may be configured to communicate with each other via a communication link such as a network or a shared memory and perform processes disclosed in the present application.

Further, the output system 50 may be configured to share various combinations of steps illustrated in, for example, FIG. 8. For example, a process executed by a given unit may be executed by multiple information processing apparatuses included in the output system 50. Also, the output system 50 may be implemented by one server or may be implemented by multiple apparatuses.

Each of the functional components described in the above embodiments may be implemented by one or more processing circuits. In the present application, the term "processing circuit" may indicate a processor that is implemented by an electronic circuit and programmed by software to implement various functions, or a device such as an application specific integrated circuit (ASIC), a digital signal processor (DSP), a field programmable gate array (FPGA), or a circuit module designed to implement various functions described above.

## Claims

1. A program for causing an information processing apparatus to function as:
a job list acquisition unit configured to send related job specification information that specifies one or more related jobs to an output system to obtain a list of the related jobs sent from the information processing apparatus to the output system; and
a display controller configured to display the list of the related jobs obtained by the job list acquisition unit on a screen.

2. The program as claimed in claim 1, wherein
the program causes the information processing apparatus to also function as a job registration unit configured to send the related jobs and the related job specification information to the output system to register the related jobs in the output system; and
the related job specification information is information processing apparatus identification information for identifying the information processing apparatus that registered the related jobs in the output system.

3. The program as claimed in claim 2, wherein
the job registration unit is configured to send each of the related jobs in association with the same related job specification information to the output system to register the related jobs; and
the job list acquisition unit is configured to obtain the list of the related jobs including job identification information for each of the related jobs, the job identification information identifying a corresponding one of the related jobs registered by the job registration unit and stored in the output system.

4. The program as claimed in claim 2 or 3, wherein the information processing apparatus identification information is a universally unique identifier (UUID), a MAC address, an IP address, information on a subscriber identity module (SIM) card, a manufacturing number, or a serial number.

5. The program as claimed in any one previous claim, wherein the related job specification information is user authentication information that is sent from an authentication server when a user of the information processing apparatus is successfully authenticated.

6. The program as claimed in claim 5, wherein the user authentication information is an access token.

7. The program as claimed in any one of claims 1 through 6, wherein
the job list acquisition unit is configured to obtain job identification information that identifies a corresponding one of the related jobs stored in the output system; and
the display controller is configured to display the job identification information for each job in the list of the related jobs.

8. The program as claimed in claim 7, wherein the job identification information is a PIN code that is input to the output apparatus to execute a corresponding one of the related jobs.

9. The program as claimed in any one of claims 1 through 8, wherein
the job list acquisition unit is configured to obtain job identification information that identifies a corresponding one of the related jobs stored in the output system; and
the program causes the information processing apparatus to also function as
an operation receiver configured to enable a user to select a job in the list of the related jobs, and
a near-field communication unit configured to send the job identification information of the selected job to an output apparatus.

10. The program as claimed in any one of claims 1 through 9, wherein the program causes the information processing apparatus to also function as a near-field communication unit configured to transmit the related job specification information to the output apparatus.

11. The program as claimed in claim 10, wherein when the job list acquisition unit obtains the list of the related jobs, the display controller displays a message requesting to hold the information processing apparatus close to the output apparatus.

12. The program as claimed in claim 1, wherein
the program causes the information processing apparatus to also function as a job registration unit configured to send the related jobs and the related job specification information to the output system to register the related jobs in the output system; and
the job list acquisition unit is configured to
send the related job specification information to the output system to obtain the list of the related jobs associated with the related job specification information and job identification information that identifies each of the related jobs, and
determine, according to a user operation, whether to send the job identification information of a job selected by the user to an output apparatus or send the related job specification information to the output apparatus.

13. An information processing system, comprising:
a program that causes an information processing apparatus to function as
a job list acquisition unit configured to send related job specification information that specifies one or more related jobs to an output system to obtain a list of the related jobs sent from the information processing apparatus to the output system and job identification information of each of the related jobs,
a display controller configured to display the list of the related jobs obtained by the job list acquisition unit on a screen, and
a first near-field communication unit configured to send the job identification information of a job selected by a user to an output apparatus; and
the output apparatus that includes
a second near-field communication unit configured to receive the job identification information of the selected job from the information processing apparatus,
a job acquisition unit configured to send the job identification information received by the second near-field communication unit to the output system to obtain the job associated with the job identification information, and
an output unit configured to output the job obtained by the job acquisition unit.

14. An information processing method performed by an information processing apparatus, the method comprising:
sending, by a job list acquisition unit, related job specification information that specifies one or more related jobs to an output system to obtain a list of the related jobs; and
displaying, by a display controller, the list of the related jobs obtained by the job list acquisition unit on a screen.

15. An information processing apparatus, comprising:
a job list acquisition unit configured to send related job specification information that specifies one or more related jobs to an output system to obtain a list of the related jobs sent from the information processing apparatus to the output system; and
a display controller configured to display the list of the related jobs obtained by the job list acquisition unit on a screen.
